# EUROPÄISCHE PATENTSCHRIFT

(11) **EP 1 359 808 B1**
(45) Veröffentlichungstag und Bekanntmachung des Hinweises auf die Patenterteilung: **26.09.2007**
(21) Anmeldenummer: 02712913.9
(22) Anmeldetag: 14.02.2002
(51) Int. Cl.: A22C 25/14, A22C 25/00

(54) **VERFAHREN UND VORRICHTUNG ZUM SCHLACHTEN VON FISCHEN, INSBESONDERE VON WEI FISCHEN**
METHOD AND DEVICE FOR SLAUGHTERING FISH, IN PARTICULAR WHITE FISH
PROCEDE ET DISPOSITIF D'ABATTAGE DE POISSONS, EN PARTICULIER DE CYPRINIDES

(30) Priorität: 14.02.2001 DE 10108793
(43) Veröffentlichungstag der Anmeldung: 12.11.2003
(73) Patentinhaber: Nordischer Maschinenbau Rud. Baader GmbH + Co. KG, 23560 Lübeck (DE)
(72) Erfinder: PEIN, Roland, 23923 Herr nburg (DE)
(74) Vertreter: Wenzel & Kalkoff
(86) Internationale Anmeldenummer: PCT/EP2002/001585
(87) Internationale Veröffentlichungsnummer: WO 2002/063967

(56) Entgegenhaltungen:
- GB-A- 230 381
- GB-A- 515 764
- GB-A- 1 048 149
- US-A- 4 979 268
- US-A- 5 735 735

## Beschreibung

Die Erfindung betrifft eine Vorrichtung zum Schlachten von Fischen, insbesondere von Weißfischen, umfassend mindestens eine Fischaufnahme zum Positionieren und Aufnehmen der Fische, einen Kehlapparat zum Durchtrennen der Kehle als Vorbereitung für den Schlundschnitt, einen Schlundapparat zum vollständigen Durchtrennen des Schlunds, einen Schlachtapparat zum Öffnen der Bauchhöhle, einen Darmtrennapparat zum Lösen der Eingeweide aus der Bauchhöhle sowie eine umlaufende Fischaufnahmetrommel, mit der die Fische zu den einzelnen Bearbeitungsstationen bewegbar sind, wobei die Fischaufnahmetrommel, die intermittierend angetrieben ist, um eine horizontale Achse drehbar ist.

Des weiteren betrifft die Erfindung ein Verfahren zum Schlachten von Fischen, insbesondere von Weißfischen, umfassend die Schritte Einlegen der Fische in Fischaufnahmen einer Fischaufnahmetrommel, Kehlen der Fische als Vorbereitung für den Schlundschnitt mittels eines Kehlapparates, vollständiges Durchtrennen des Schlunds mit einem Schlundapparat, Öffnen der Bauchhöhle mit einem Schlachtapparat, Lösen der Eingeweide mit einem Darmtrennapparat, wobei die Fische mit der Fischaufnahmetrommel, die sich um eine horizontale Achse dreht, so daß die Fische auf einer im wesentlichen vertikalen Kreisbahn bewegt werden, nacheinander und intermittierend an die einzelnen Bearbeitungsstationen bewegt werden.

Bei Vorrichtungen und Verfahren der bekannten Art werden die Fische nach einem manuellen Kehlschnitt in Fischaufnahmen der Fischaufnahmetrommel eingelegt und kontinuierlich an den einzelnen Arbeitsstationen, die sich im Bereich der Kreisbahn der Trommel befinden, vorbei bewegt. Es kommt auch vor, daß die Fische ungekehlt in die bekannten Vorrichtungen eingelegt werden. Die Fischaufnahmetrommel ist um eine vertikale Achse drehbar, so daß die Fische mit dem Kopf nach oben (also in vertikaler Stellung) weisend und mit dem Schwanz nach unten in die Fischaufnahmen eingelegt und auf einer im wesentlichen horizontalen Kreisbahn bewegt werden.

Bei Vorrichtungen der genannten Art ist es von besonderer Bedeutung, daß einerseits die ergonomischen Bedingungen für die Bedienperson den Erfordernissen entsprechen und andererseits die ungeköpften Fische im Bereich der Kiemenhöhle geöffnet werden, ohne daß die Kragenknochen und die Kragenknochenspitze des jeweiligen Fisches verletzt werden, die Bauchhöhle mit einem mittigen Schnitt geöffnet und die Eingeweide unbeschädigt aus der Bauchhöhle entfernt werden. Wahlweise, und zwar in Abhängigkeit der Fischrasse, der Fischgröße und anderer den Fischzustand definierender Bedingungen, soll der Schlachtschnitt in Richtung Schwanz bis zum Anus oder über diesen hinaus erfolgen. Die Fischrümpfe, Fischköpfe und Eingeweide sollen getrennt voneinander abgeführt werden können. Weiterhin ist es erwünscht, daß die Vorrichtung universell einsetzbar ist, z.B. zum Schlachten und/oder Köpfen mit oder ohne vorherigem Kehlen.

Allen genannten Vorrichtungen und Verfahren haftet jedoch der Nachteil an, daß sie eine für die Bedienperson ungünstige Ergonomie aufweisen, insbesondere vor dem Hintergrund, daß die Vorrichtungen überwiegend an Bord von Fangschiffen/Trawlern eingesetzt werden, die teilweise eine Deckshöhe von maximal 2m aufweisen. Bei den bekannten Vorrichtungen muß sich die Bedienperson aufgrund der Anordnung der Fischaufnahmetrommel über die Vorrichtung beugen, was bei den beengten Platzverhältnissen nur sehr schwer möglich ist. Weiterhin muß die Bedienperson durch die Position der Fische in der Fischaufnahme eine Hubarbeit leisten, was über den Tag/die Schicht betrachtet aufgrund des hohen Gewichtes eine enorme körperliche Belastung darstellt. Des weiteren sind die Schnittergebnisse mit den bekannten Vorrichtungen und Verfahren nicht befriedigend, insbesondere was die Vorbereitung der Fische zur Weiterverarbeitung als Salzfisch betrifft. Ein weiterer Nachteil besteht darin, daß die Eingeweide mit den herkömmlichen Vorrichtungen bzw. während der bekannten Verfahren zerstört werden, so daß diese nicht mehr verwertbar sind bzw. den Fisch bzw. die Bauchhöhle mit Keimen oder dergleichen verseuchen. Dadurch, daß die Fische in einer vertikalen Ausrichtung transportiert und bearbeitet werden, fehlt es an einer Kopfunterstützung, was zu uneinheitlichen und undefinierten Schnitten führt, da der Kopf während der gesamten Bearbeitung beweglich ist. Dies führt im übrigen auch dazu, daß der Kopf wegen der fehlenden Fixierung nicht an beliebiger Stelle abgeführt werden kann. Die kontinuierliche Förderung der Fische an den einzelnen Bearbeitungsstationen führt auch dazu, daß die Schnittergebnisse teilweise ungenügend sind, da eine definierte Bearbeitung an einem sich bewegenden Objekt sehr schwierig ist bzw. einen sehr hohen konstruktiven Aufwand erfordert. Für den Fall, daß die Fische ungekehlt in die Fischaufnahmen eingelegt werden, schneidet der Schlundapparat Kehle, Membran und Schlund in einem. Dies führt jedoch zu einem die Kragenknochen verletzenden und in der Schnittführung undefinierten Schnitt. Des weiteren ist durch ein Verfahren ohne vorherigen Kehlschnitt nicht sichergestellt, daß die Membran sicher von den Eingeweiden getrennt wird.

Aus der GB 1 048 149 ist eine Vorrichtung zum Fördern von Fischen an unterschiedliche Bearbeitungsstationen bekannt, bei der die Fische um eine horizontale Achse drehbar sind. Der Transport erfolgt intermittierend, und zwar derart, daß die Fische während der Bearbeitung an der jeweiligen Bearbeitungsstation still stehen. Dadurch werden wesentliche oben erwähnte Nachteile vermieden. Allerdings weist die Vorrichtung gemäß GB 1 048 149 lediglich eine seitlich an den Fischen angreifende Rumpfklemmung auf. Der Kopf des Fisches ist während der gesamten Bearbeitung beweglich, so daß dies zu uneinheitlichen und undefinierten Schnitten insbesondere bei Fischen unterschiedlicher Größe führt. Des weiteren erfolgt der Transport der Fische in deren Schwimmrichtung, was die Bearbeitung an den einzelnen Bearbeitungsstationen erschwert.

Aufgabe der vorliegenden Erfindung ist es daher, eine Vorrichtung sowie ein Verfahren vorzuschlagen, mit denen eine vereinfachte Handhabung beim Schlachten insbesondere von Weißfisch in einem Größenbereich von 35 bis 90 cm gewährleistet ist und gleichzeitig das Schlachtergebnis verbessert wird.

Die Aufgabe wird erfindungsgemäß durch eine Vorrichtung der eingangs genannten Art dadurch gelöst, daß die Fische quer in ihrer Längsachse auf einer im wesentlichen vertikalen Kreisbahn bewegbar sind, wobei die Fischaufnahme Brustflossenaufnahmen zum Positionieren sowie eine Rumpfklemmung zum Fixieren der Fischrümpfe umfaßt und zusätzlich zu jeder Fischaufnahme eine Kopfauflage mit Kopfklemmung vorgesehen ist, wobei die federbelastete Kopfauflage um einen Drehpunkt schwenkbar ist. Durch die erfindungsgemäße Ausführung der Vorrichtung ist zum einen sichergestellt, daß ergonomische Aspekte verbessert wurden und sich damit die Handhabung erheblich vereinfacht hat, da das Einlegen der Fische in die Aufnahmetrommel erleichtert ist und die Fische somit ohne wesentliche Hubarbeit in die Fischaufhahmen gelegt werden können. Auch ist durch die horizontale Achse der Fischaufnahmetrommel eine kompakte Bauweise gewährleistet, was insbesondere den Einbau in engen Räumen ermöglicht. Zum anderen ermöglicht der intermittierende Antrieb der Fischaufnahmetrommel eine sehr genaue Bearbeitung der Fische, da diese bei der eigentlichen Bearbeitung ruhen. Die Qualität der Bearbeitung, insbesondere die Schnittqualität wird dadurch entscheidend verbessert. Zusätzlich zur Fischaufnahme für den Rumpf ist eine Kopfauflage vorgesehen. Dadurch ist der Fisch während der gesamten Bearbeitung vollflächig unterstützt, was zu einer verbesserten und vereinfachten Positionierung der Fische führt. Die verbesserte Positionierung gewährleistet eine optimierte und wiederholbare Schnittführung mit verbesserten Schnittergebnissen. Dadurch, daß die Kopfauflage bewegbar ausgebildet ist, ist die Bearbeitung von Fischen in einem vergrößerten Längenbereich, vorzugsweise in einem Bereich von 35 bis 90 cm gewährleistet, da die Kopfauflage je nach Fischgröße ausweichen kann. Zusätzlich zur Kopfauflage ist auch noch eine Kopfklemmung vorgesehen. Diese Klemmung ermöglicht es, daß der Kopf an jeder Bearbeitungsposition eine definierte Lage aufweist und fixiert ist, was zu einer verbesserten Schnittqualität führt. Des weiteren kann durch die separate Klemmung des Rumpfes einerseits und des Kopfes andererseits eine Abgabe des jeweils fixierten Teiles an unterschiedlichen Positionen erfolgen.

Besonders vorteilhaft ist die Ausführungsform, bei der der Schlachtapparat zusätzlich zur Schlachtsichel ein Kreismesser umfaßt Dadurch wird sichergestellt, daß die Bauchdecke beim Schlachtschnitt unabhängig von der Fischgröße vollständig geschnitten wird, so daß ein mittiger und gerader Schnitt entsteht, der beispielsweise für die Herstellung von Salzfisch erforderlich ist.

Besonders vorteilhaft ist es, daß die Schlachtsichel zweiteilig ausgebildet ist und aus einem Hauptteil und einem Spitzenteil besteht. Dadurch wird auf besonders effektive Weise gewährleistet, daß äußere Einflüsse, die auf die Schlachtsichel wirken, wie z.B. Beschleunigung durch Wellenbewegung auf einem Schiff, keinen Einfluß auf die Arbeitsweise bzw. das Arbeitsergebnis haben, da die Führung der Schlachtsichel mittels des Hauptteils erfolgt, während das Auslenken der Schlachtsichel auf das Spitzenteil beschränkt ist. Hierzu ist mindestens das Spitzenteil der Schlachtsichel federbelastet und um einen Drehpunkt schwenkbar bzw. auslenkbar. Der zusätzliche Freiheitsgrad der Schlachtsichel macht dieselbe daher unempfindlich gegen äußere Störeinflüsse. Mit anderen Worten ist die bewegliche Masse, die beispielsweise einer Beschleunigung ausgesetzt ist, deutlich reduziert.

Die oben genannte Aufgabe wird bei dem Verfahren der eingangs bezeichneten Art dadurch gelöst, daß die Fische quer zu ihrer Längsachse transportiert, mittels ihrer Brustflossen positioniert, im Bereich des Rumpfes fixiert und in den Fischaufnahmen der Fischaufiiahmetrommel zusätzlich am Kopf abgestützt werden, wobei der Kopf auf einer Kopfauflage fixiert wird. Dadurch wird eine vereinfachte Handhabung geschaffen, da die Fischaufnabmen zum Einlegen leichter zugänglich sind und die Hubarbeit deutlich reduziert ist. Des weiteren ist die Positionierung und Fixierung wesentlich verbessert, insbesondere auch durch die Fixierung des Rumpfes und des Kopfes, so daß eine exakte Bearbeitung an jeder Bearbeitungsstation gewährleistet ist, und zwar für Fische in einem unterschiedlichen Größenbereich.

In einer vorteilhaften Verfahrensweise werden der Kopf sowie der Steg zwischen der Kragenknochenspitze und dem Verbindungspunkt der Kiemen vor dem Kehlschnitt nach unten gedrückt, so daß die Haut im Bereich der Kragenknochenspitze gespannt wird. Durch die Spannung wird zum einen erreicht, daß der Kehlapparat leichter und sauberer durch die Haut schneiden kann. Zum anderen greift der Kehlapparat mit dem Kreismesser nahezu senkrecht an dem Verbindungssteg an, wodurch die sichere Trennung gewährleistet ist

Weitere bevorzugte Ausführungsformen und Vorgehensweisen ergeben sich aus den Unteransprüchen und der Beschreibung. Anhand der beigefügten Zeichnung werden ausgewählte Ausführungsformen und Vorgehensweisen ausführlich beschrieben. In der Zeichnung zeigt:
- Fig. 1: eine Vorderansicht einer erfindungsgemäßen Vorrichtung,
- Fig. 2: eine Draufsicht auf einen Ausschnitt der Vorrichtung gemäß Figur 1,
- Fig. 3 ': eine Einzelheit der Vorrichtung, nämlich den Kehlapparat in seiner Ausgangsstellung vor dem Anschnitt eines Fisches, in einer vergrößerten Darstellung aus der Sicht der Bedienperson,
- Fig. 4: den Kehlapparat gemäß Figur 3 in seiner Bearbeitungsstellung, wobei der Kopf des Fisches geklemmt ist,
- Fig. 5: eine weitere Einzelheit der Vorrichtung, nämlich die Führung zwischen dem Kehlapparat und dem Schlundapparat in einer unbelasteten Stellung,
- Fig. 6: die Führung gemäß Figur 5 in einer belasteten, nämlich durch den Fisch nach oben ausgelenkten Stellung,
- Fig. 7: eine weitere Einzelheit der Vorrichtung, nämlich den Schlundapparat in seiner Ausgangsstellung vor dem Schlundschnitt, in einer vergrößerten Darstellung aus der Sicht der Bedienperson,
- Fig. 8: den Schlundapparat gemäß Figur 7 in seiner Bearbeitungsstellung, wobei der Kopf des Fisches geklemmt ist,
- Fig. 9: eine weitere Einzelheit der Vorrichtung, nämlich den Köpfapparat in seiner Bearbeitungsstellung, in einer vergrößerten Darstellung aus der Sicht in Richtung der Bedienperson,
- Fig. 10: eine weitere Einzelheit der Vorrichtung, nämlich den Schlachtapparat in einer Stellung kurz nach dem Eintauchen in die geöffnete Bauchhöhle, in einer vergrößerten Darstellung aus der Sicht gemäß Figur 9,
- Fig. 11: den Schlachtapparat gemäß Figur 10 in einer nächsten Bearbeitungsstellung,
- Fig. 12: den Schlachtapparat gemäß Figur 10 in einer nächsten Bearbeitungsstellung,
- Fig. 13: den Schlachtapparat gemäß Figur 10 in einer nächsten Bearbeitungsstellung,
- Fig. 14: eine weitere Einzelheit der Vorrichtung, nämlich den Darmtrennapparat, in einer vergrößerten Darstellung aus der Sicht gemäß Figur 9,
- Fig. 15: den Darmtrennapparat gemäß Figur 14 in einer Vorderansicht,
- Fig. 16: Einzelheiten eines Fisches während des Kehlvorganges in Seitenansicht,
- Fig. 17: eine weitere Ausführungsform des Schlachtapparates in einer Stellung kurz nach dem Eintauchen in die geöffnete Bauchhöhle, in einer vergrößerten Darstellung aus der Sicht gemäß Figur 9,
- Fig. 18: den Schlachtapparat gemäß Figur 17 in einer nächsten Bearbeitungsstellung,
- Fig. 19: den Schlachtapparat gemäß Figur 17 in einer nächsten Bearbeitungsstellung, und
- Fig. 20: den Schlachtapparat gemäß Figur 17 in einer nächsten Bearbeitungsstellung.

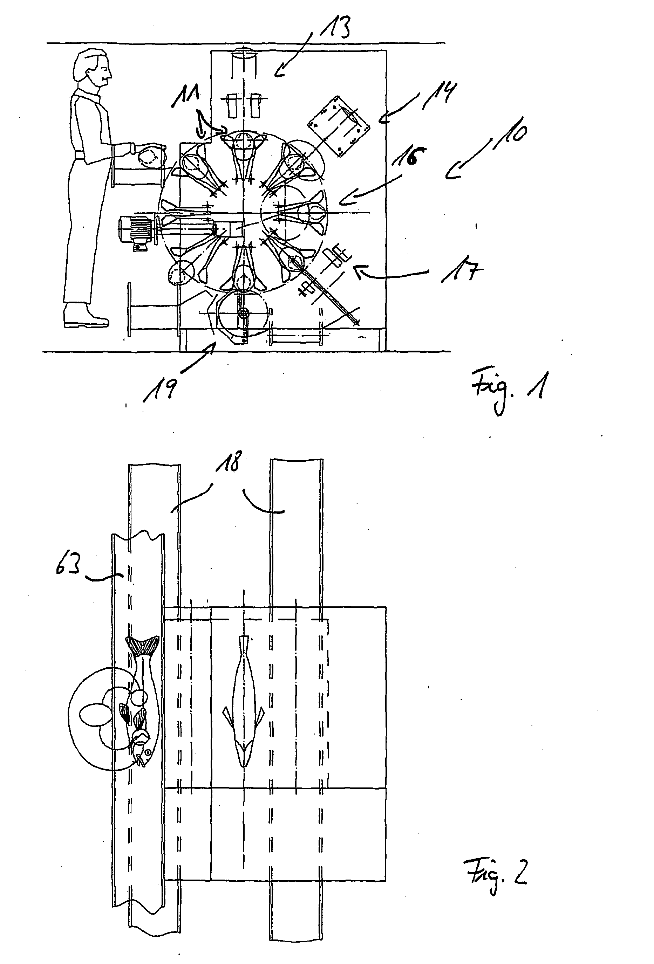

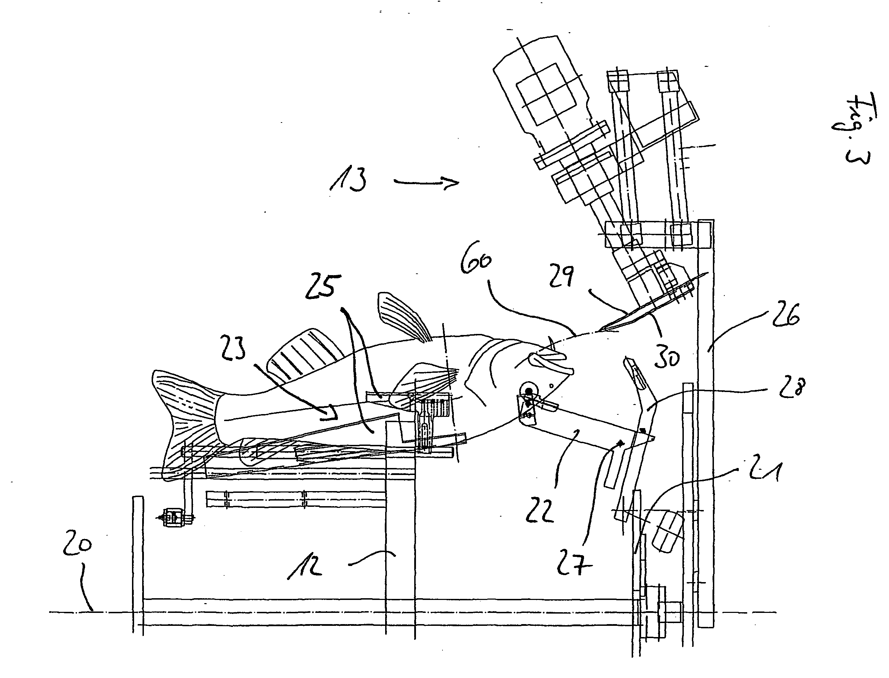

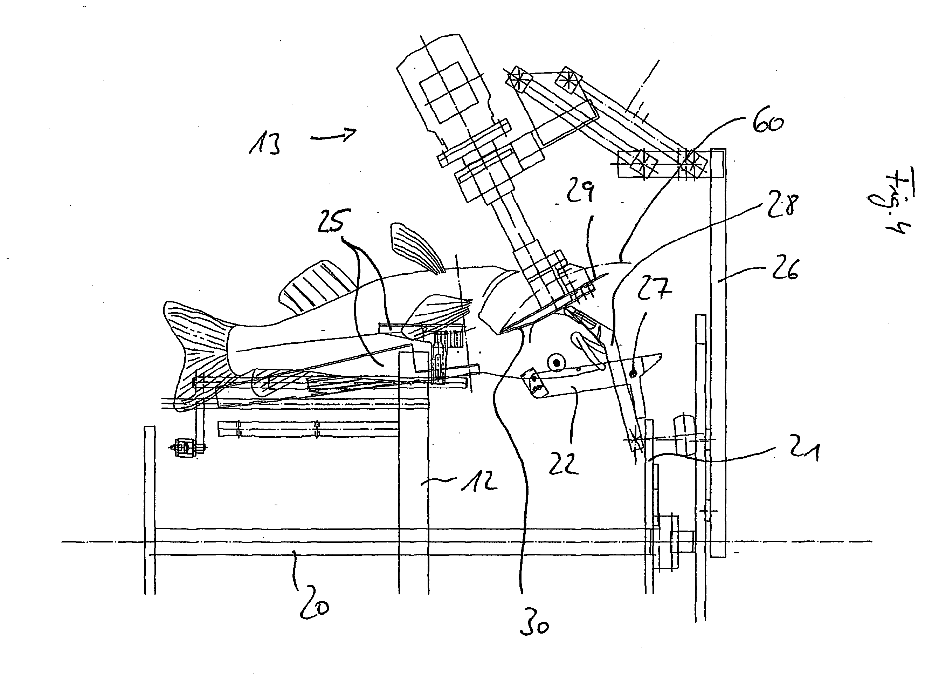

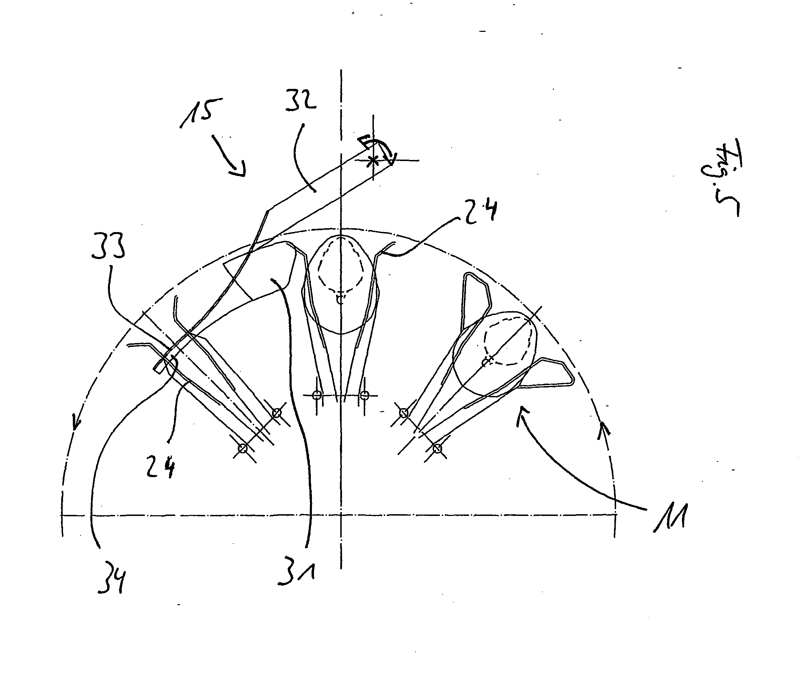

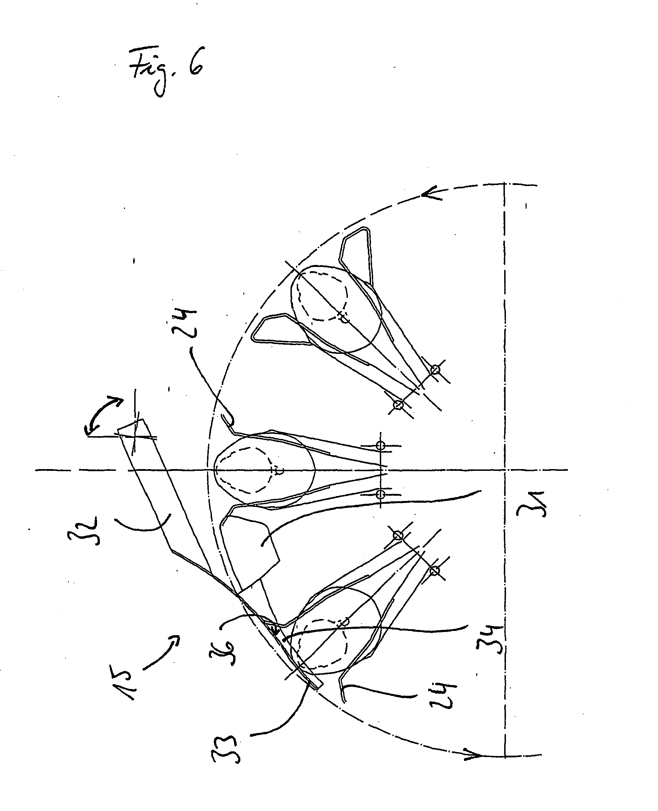

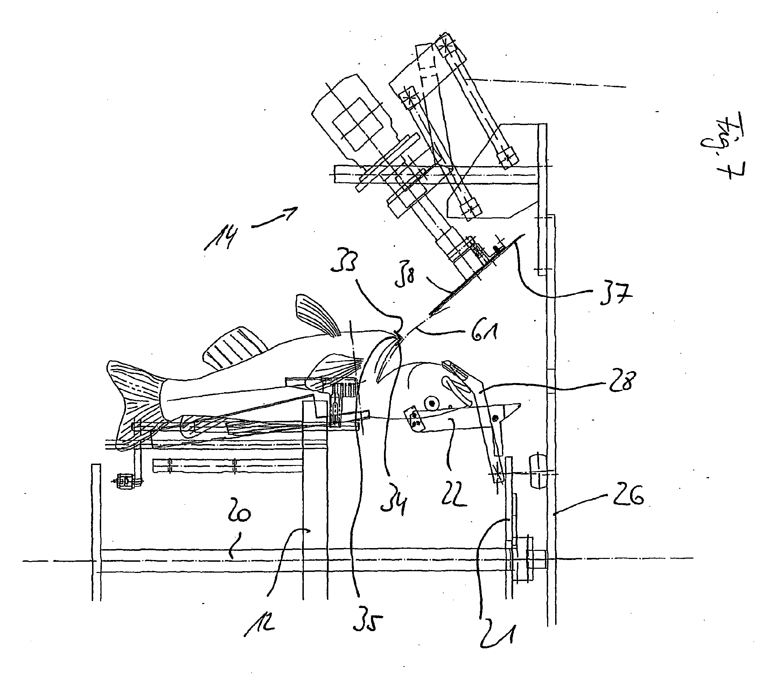

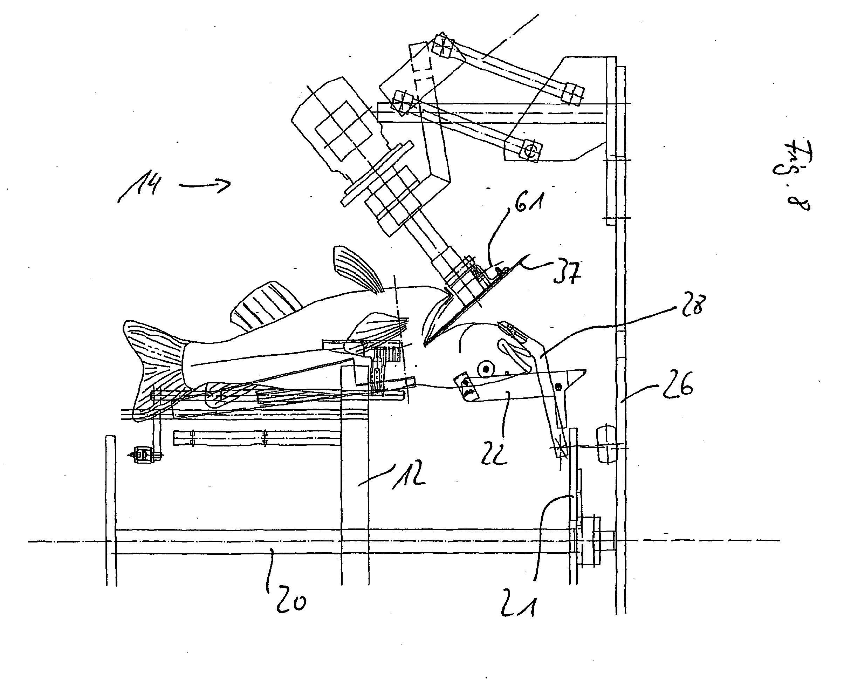

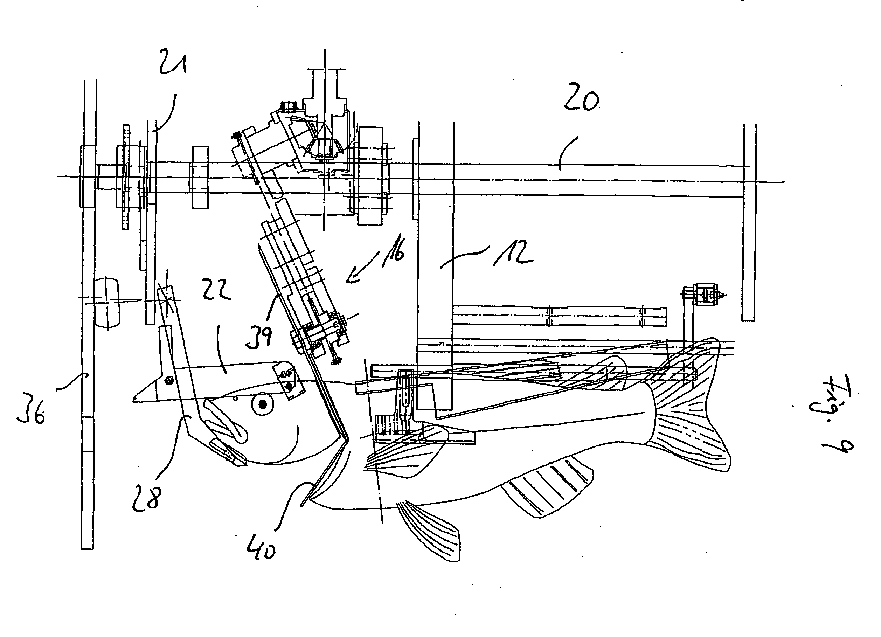

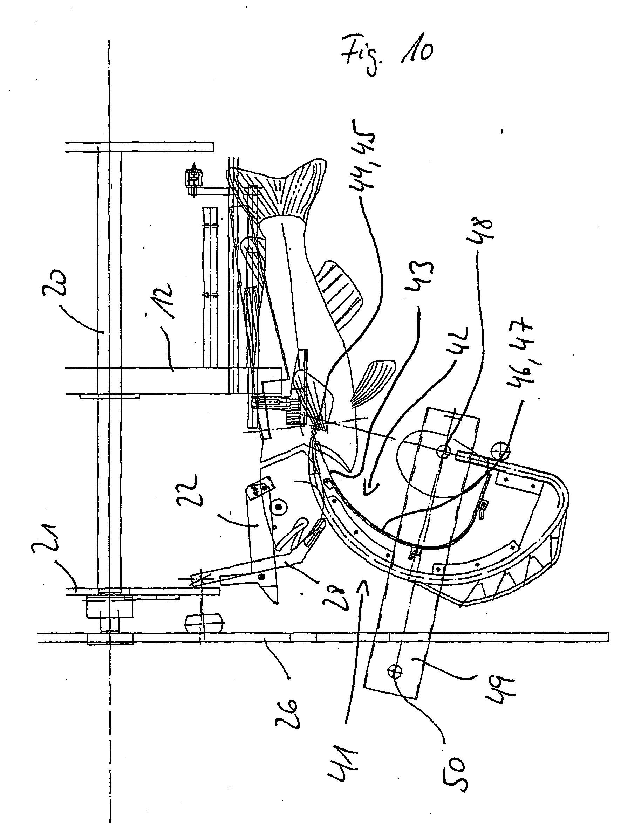

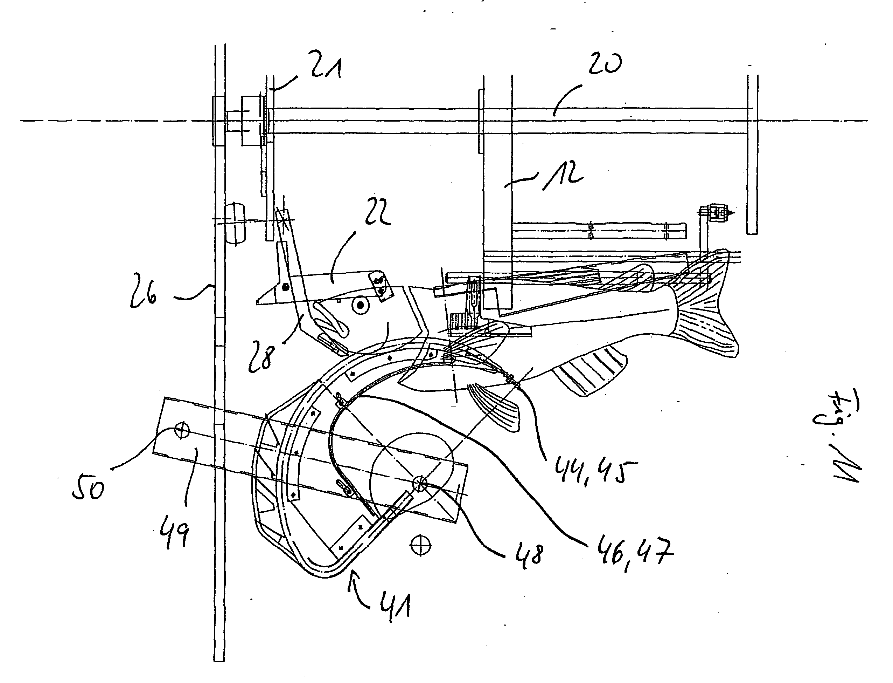

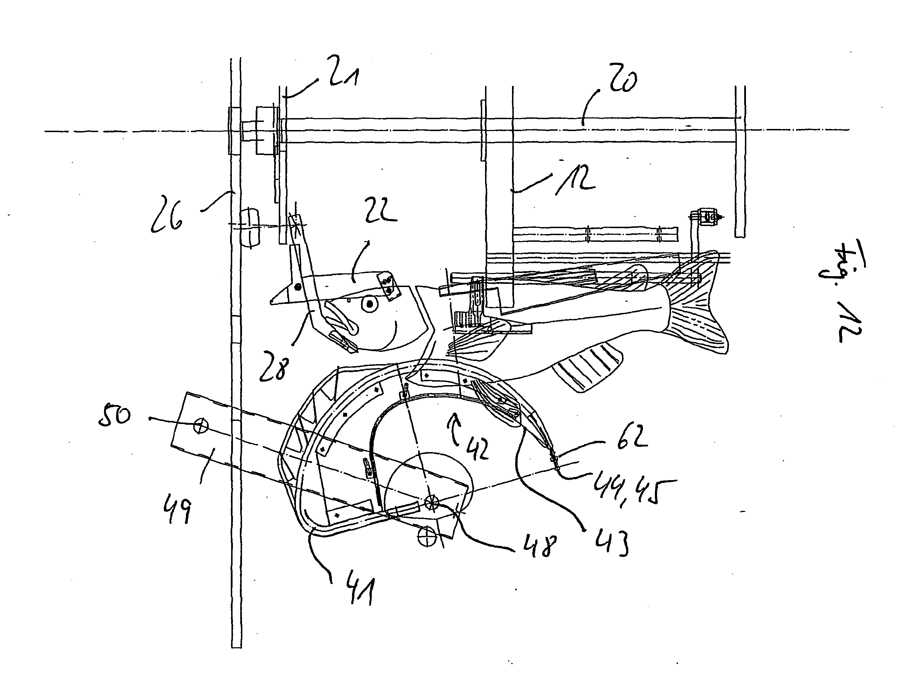

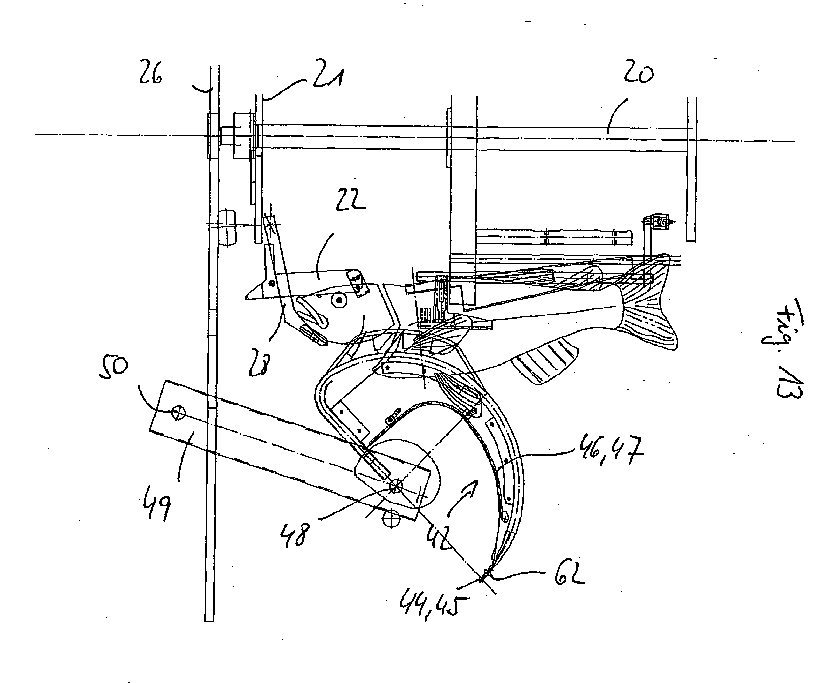

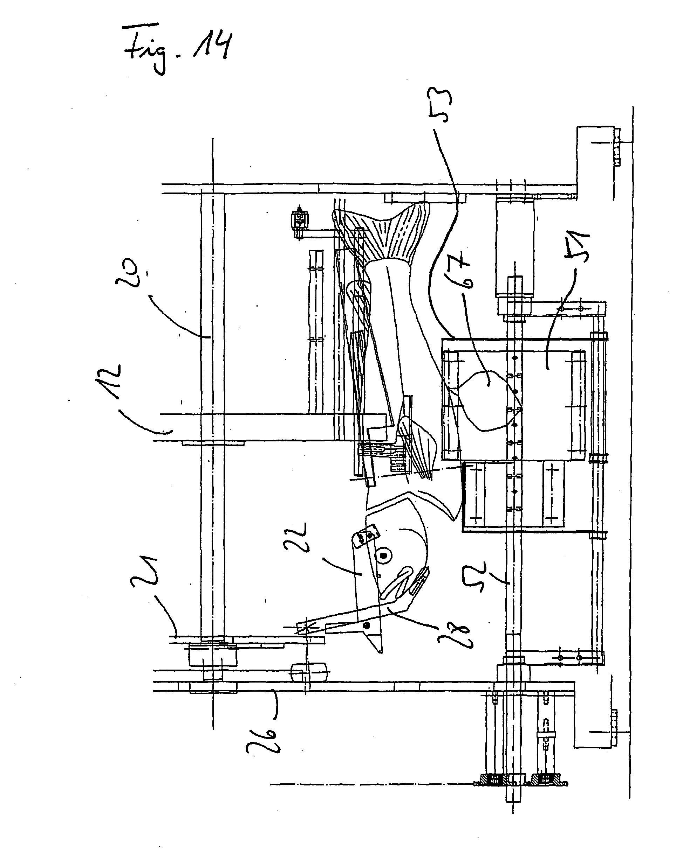

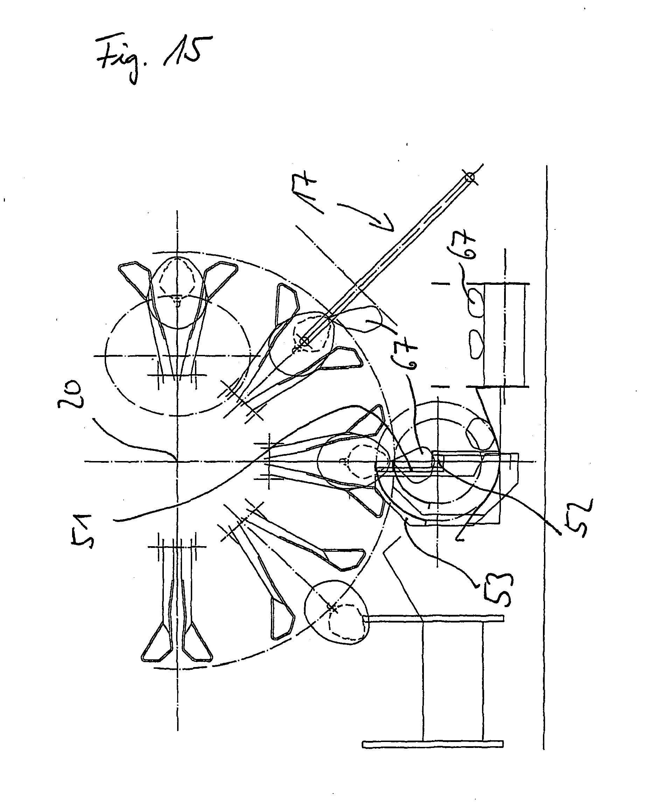

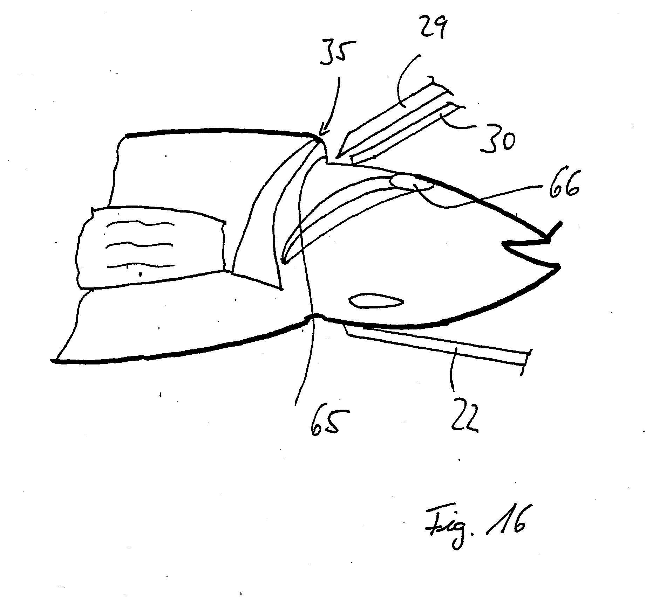

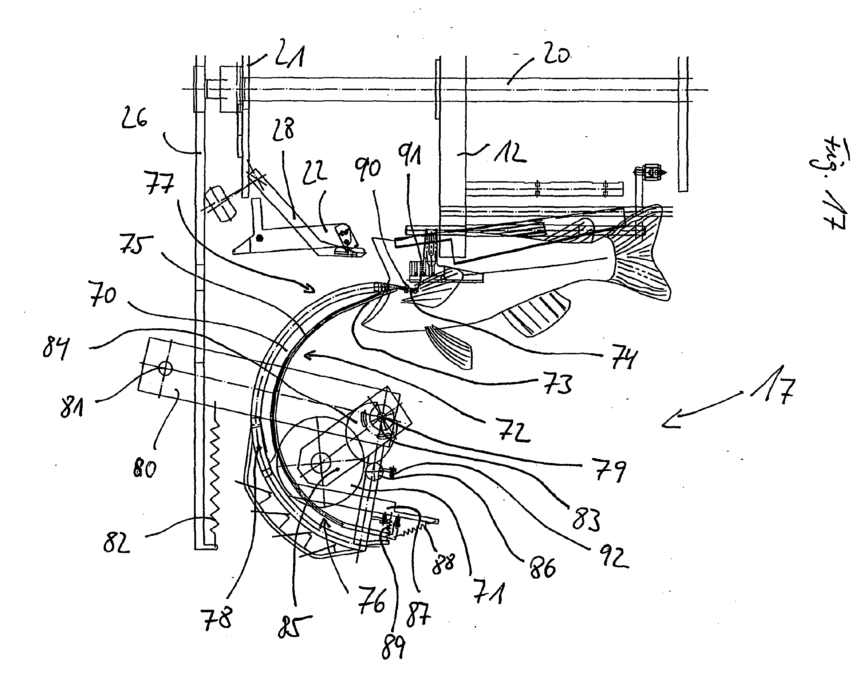

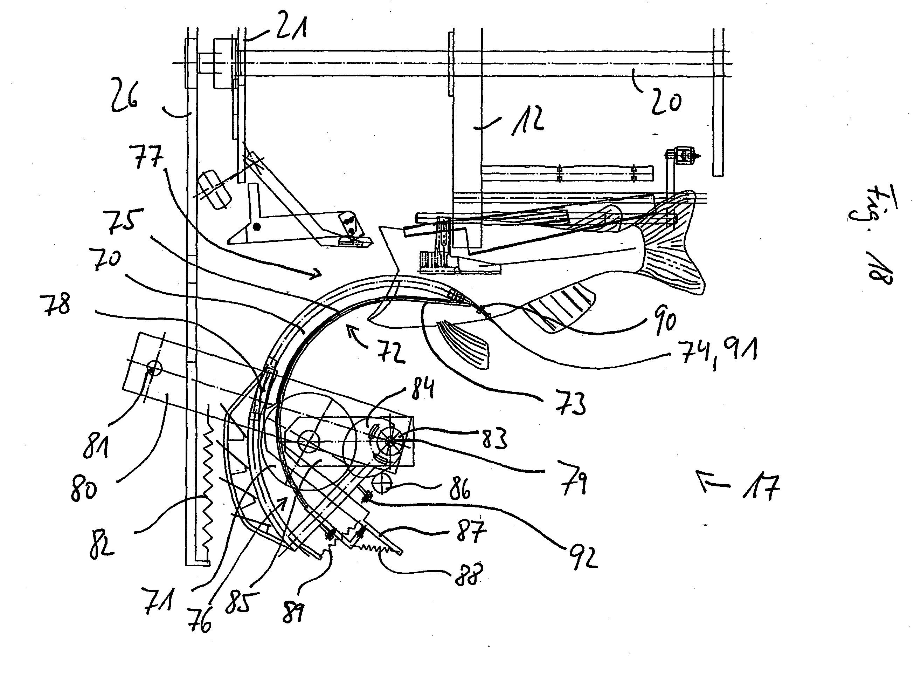

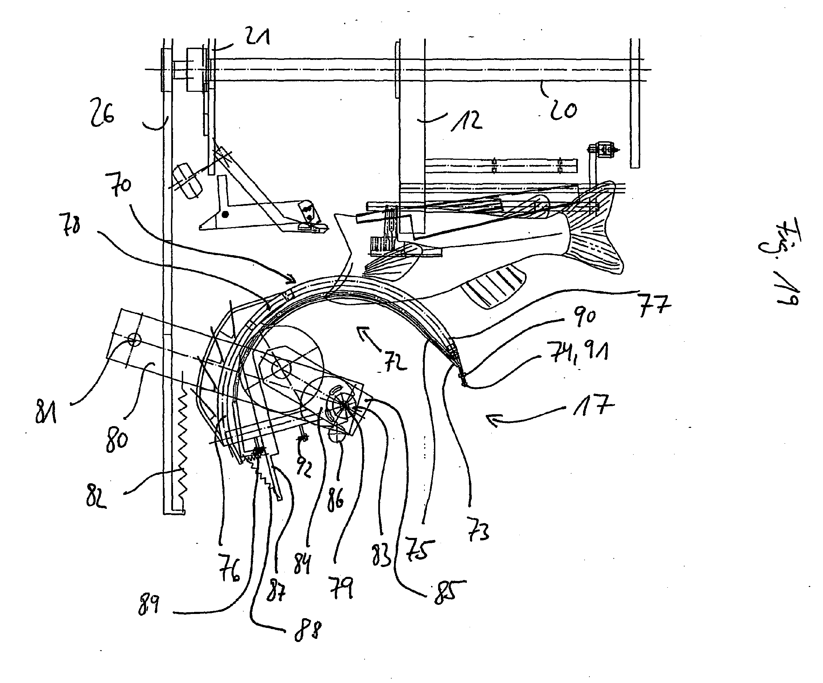

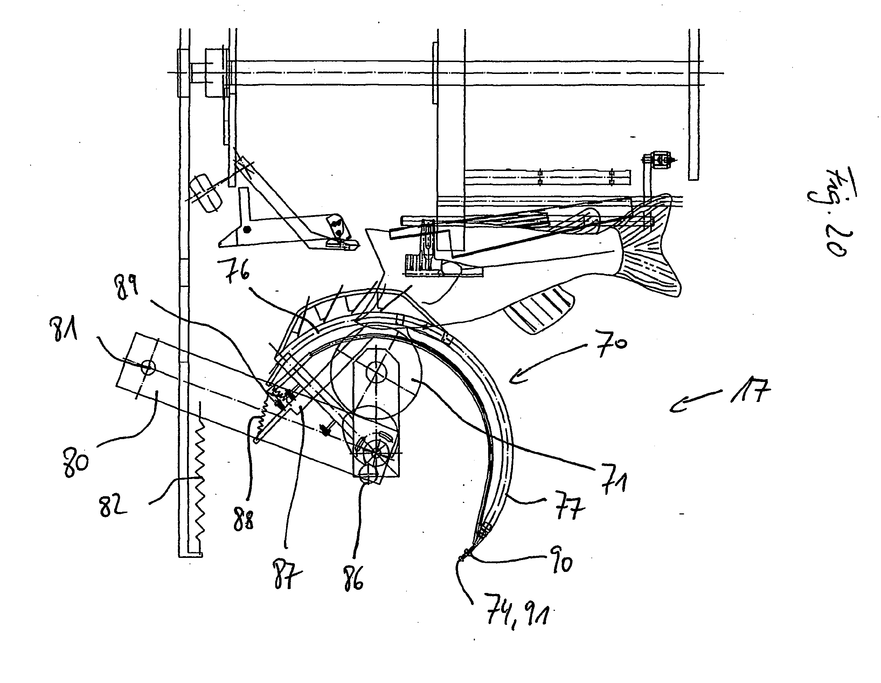

Die in den Figuren 1 bis 15 bzw. 17 bis 20 beschriebene Vorrichtung 10 dient zum Schlachten von Fisch, insbesondere von Weißfisch und zwar vorzugsweise in einem Größenbereich von 35 bis 90 cm.

Die Vorrichtung 10 umfaßt mehrere Fischaufnahmen 11 zum Einlegen der Fische. Die Fischaufnahmen 11 sind kreisförmig angeordnet und bilden eine umlaufend angetriebene Fischaufnahmetrommel 12. Mit der Fischaufnahmetrommel 12 sind die Fische zu den einzelnen Bearbeitungsstationen der Vorrichtung 10 bewegbar. In Transportrichtung der Fischaufnahmetrommel 12 befindet sich nach einer Station zum Einlegen der Fische in die Fischaufnahme 11 im Bereich einer Produktzuführung ein Kehlapparat 13 zum Durchtrennen der Kehle als Vorbereitung für den Schlundschnitt. Dem Kehlapparat 13 folgt ein Schlundapparat 14 zum Durchtrennen des Schlunds. Zwischen dem Kehlapparat 13 und dem Schlundapparat 14 sind Führungen 15 vorgesehen (siehe insbesondere Figuren 5 und 6). Im gezeigten Ausführungsbeispiel ist hinter dem Schlundapparat 14 ein Köpfapparat 16 zum Trennen den Kopfes vom Rumpf vorgesehen. Der Köpfapparat 16 ist jedoch auch abschaltbar bzw. ausbaubar, so daß mit der Vorrichtung 10 geschlachtet und/oder geköpft werden kann. An den Köpfapparat 16 schließt sich ein Schlachtapparat 17 zum Öffnen der Bauchhöhle an. Als letzte Arbeitsstation vor Abgabe des Fisches an eine Produktabführung 18 ist ein Darmtrennapparat 19 zum vollständigen Lösen der Eingeweide aus der Bauchhöhle vorgesehen.

Im Ausführungsbeispiel gemäß Figur 1 sind acht Fischaufnahmen 11 gleichmäßig auf einer kreisförmigen Bahn der Fischaufhahmetrommel 12 verteilt. Die Fischaufnahmetrommel 12 ist um eine horizontale Achse 20 drehbar, derart, daß Fische auf einer im wesentlichen vertikalen Kreisbahn bewegbar sind. Eine zweite Trommel 21 ist ebenfalls auf der Achse 20 angeordnet, allerdings beabstandet zur Fischaufnahmetrommel 12. An der Trommel 21 sind Kopfauflagen 22 angeordnet, und zwar jeweils korrespondierend zu einer Fischaufnahme 11, so daß in der bevorzugten Ausführungsform ebenfalls acht Kopfauflagen 22 vorgesehen sind. Durch die Anordnung sowohl der Fischaufnahmetrommel 12 als auch der Trommel 21 auf derselben Achse 20 drehen sich die Trommeln 12 und 21 synchron. Die Fischaufnahmetrommel 12 - und damit auch die Trommel 21 - ist intermittierend angetrieben. Dadurch wird gewährleistet, daß an definierten Positionen ein Stillstand, vorzugsweise im Bereich der einzelnen Arbeitsstationen, erreicht wird.

Jede Fischaufnahme 11 weist ein Sicherungselement 23 auf, das aus einer Brustflossenaufnahme 24 und einer Rumpfklemmung 25 besteht. Die Brustflossenaufnahme 24 ist paarweise vorgesehen, nämlich zu beiden Seiten eines einzulegenden Fisches, und weist Mittel auf, mit denen der Fisch in der Fischaufnahme 11 in Längsrichtung vorpositionierbar ist. Korrespondierend zu den Fischaufnahmen 11 sind die Kopfauflagen 22 in Richtung der Bearbeitungsstationen, die an einem festen Werkzeugständer 26 angeordnet sind, angebracht. Die Kopfauflagen 22 sind um einen Drehpunkt 27 schwenkbar, derart, daß die Kopfauflagen 22 aus einer oberen Anschlagposition nach unten bewegbar sind. Alternativ ist es auch denkbar, daß die Bewegung der Kopfauflagen 22 auf einer linearen Bahn erfolgt. Des weiteren sind die Kopfauflagen 22 federbelastet, derart, daß sie federn nachgebend ausgebildet sind, so daß sie aus der nach unten ausgelenkten Position wieder in die obere Ausgangsposition, nämlich gegen einen Anschlag bewegbar sind. Jeder Kopfauflage 22 ist eine Kopfklemmung 28 zugeordnet, die den Kopf sandwichartig zwischen sich und der Kopfauflage 22 einklemmt. Die Kopfklemmung 28 ist in dem gezeigten Ausführungsbeispiel kurvengesteuert. Andere Steuerungen sind jedoch auch möglich. Die exakte Funktionsweise der Kopfklemmung 28 wird im folgenden im Rahmen der Verfahrensbeschreibung näher erläutert.

Die Rumpfklemmung 25 besteht im wesentlichen aus einem Dreibackenfutter, nämlich aus zwei seitlich am Fisch angreifenden Seitenbacken und einer Rückenauflage. Durch Rotation der Fischaufnahmetrommel 12 in Richtung des Kehlapparates 13 bewegen sich die Seitenbacken aufeinander zu und klemmen den Fisch ein. Die Rückenauflage wird durch die Seitenbacken zwangsgesteuert, derart, daß sie sich beim Zusammendrücken der Seitenbacken anhebt. Vorzugsweise verfügen die Seitenbacken an ihren dem Fisch zugewandten Innenseiten Halteelemente oder dergleichen, die zum sicheren Halten der Fisch in der Fischaufnahme 11 dienen.

Der Kehlapparat 13 umfaßt ein Kreismesser 29 sowie eine zum Kreismesser 29 korrespondierende Messerabdeckung 30. Der gesamte Kehlapparat 13 ist auf einer Kreisbahn 60 bewegbar. Diese Kreisbahn 60 ist experimentell ermittelt worden, derart, daß die Kreisbahn 60 eine für unterschiedliche Fischgrößen optimierte Bahn darstellt. Die Schwenkbewegung des Kehlapparates 13 ist in der bevorzugten Ausführungsform über ein Parallelogramm realisiert. Es sind jedoch auch andere übliche Schwenk- und Antriebseinrichtungen einsetzbar. Der Kehlapparat 13 ist am Werkzeugständer 26 fest montiert. In seiner Ruheposition befindet sich der Kehlapparat 13 außerhalb des Transport- und Wirkbereiches der Fische. Mittels geeigneter Steuermittel ist der Kehlapparat 13 in die Kreisbahn der Fischaufnahmetrommel 12 bewegbar. Die Messerabdeckung 30 ist unterhalb des Kreismessers 29, also auf der dem Fisch zugewandten Seite angeordnet. In der Schnittposition sind die Messerabdeckung 30 und das Kreismesser 29 in einem spitzen Winkel zur Achse 20, und damit zu den Fischen, angeordnet.

Die zwischen dem Kehlapparat 13 und dem Schlundapparat 14 angeordneten Führungen 15 zum Führen und/oder Auslenken der Kragenknochen vor dem Erreichen des Schlundapparates 14 sind mindestens zweiteilig ausgebildet und bestehen aus einem festen bzw. starren Element 31 und einem beweglichen Element 32. Das starre Element 31 ist aus einem einfachen Blech gebildet und dient zum Eingriff in den zuvor erfolgten Kehlschnitt. Das Element 31 ist so tief angeordnet, daß es unmittelbar an den Kragenknochen der Fische anliegt, wobei bei der Positionierung des Elementes 31 vom kleinsten zu verarbeitenden Fisch ausgegangen wird. An das starre Element 31 schließt sich nahtlos das bewegliche Element 32 an, so daß eine durchgehende Führung der Fische gewährleistet ist. Das bewegliche Element 32 ist L-förmig ausgebildet, wobei ein Schenkel 33 bauchseitig auf dem Fisch aufliegt und ein weiterer Schenkel 34 die Kragenknochenspitze 35 abdeckt. Die Kragenknochenspitze 35 wird demnach in der durch die Schenkel 33, 34 gebildeten Kehle 36 gehalten. Der Schenkel 34 ist im gezeigten Ausführungebeispiel lediglich 15 bis 20 mm lang. Es sind auch andere Längen möglich. Es muß lediglich sichergestellt sein, das der Schenkel 34 nicht den Bauchraum abdeckt, damit das Schlundmesser in die gewünschte Position bewegbar ist. Die Länge des Schenkels 34 richtet sich demnach wieder nach dem kleinsten zu verarbeitenden Fisch. Das bewegliche Element 32 ist um einen Drehpunkt schwenkbar und federbelastet, so daß es durch die Kragenknochen nach oben bewegbar ist.

Der Schlundapparat 14 umfaßt ein Kreismesser 37 und eine korrespondierend zum Kreismesser 27 ausgebildete Messerabdeckung 38. Der Schlundapparat 14 ist ebenfalls am Werkzeugständer 26 befestigt und auf einer wiederum experimentell ermittelten Kreisbahn 61 bewegbar, und zwar von einer Ruheposition in eine Arbeitsposition. Mit dem Schlundapparat 14 ist der gleiche Druck auf die Kragenknochen aufbringbar, wie zuvor durch die flexiblen Elemente 32, und zwar mittels der Messerabdeckung 38. Dadurch ist gewährleistet, daß die Kragenknochen aus dem Schnittbereich gehalten werden, so daß diese unbeschädigt bleiben.

Der Köpfapparat 16 ist am Werkzeugständer 26 befestigt. Der Köpfapparat 16 selbst ist ortsfest angeordnet und verfügt über ein rotierend antreibbares Kreismesser 39. Dem Kreismesser 39 ist eine korrespondierende Messerabdeckung 40 zugeordnet, die in den Schlundschnitt greift. Dadurch wird die Trennung zwischen Kopf und Rumpf des Fisches sichergestellt.

Dem Köpfapparat 16 folgt in Transportrichtung der Schlachtapparat 17, der eine Schlachtsichel 41 umfaßt. Die Schlachtsichel 41 weist an ihrer Innenseite 42 eine Schneide 43 auf, die sich bis in den Bereich der Sichelspitze 44 erstreckt. Allerdings ist der Bereich der Sichelspitze 44 selbst stumpf ausgebildet. Im gezeigten Ausführungsbeispiel ist die Sichelspitze 44 mit einer Kugel 45 versehen. Es sind jedoch auch andere stumpfe Ausbildungen der Sichelspitze 44 denkbar. Die Schneide 43 ist zu beiden Seiten mit einer Messerabdeckung 46, 47 versehen, wobei die Messerabdeckungen 46, 47 federbelastet sind. In der Ausgangsposition, also im unbelasteten Zustand verdecken die Messerabdeckungen 46, 47 die Schneide 43. Durch Druck auf die Messerabdeckungen 46, 47, beispielsweise durch die Bauchhaut des Fisches, sind die Messerabdeckungen 46, 47 nach oben bewegbar, so daß die Schneide 43 aus den Messerabdeckungen 46, 47 herausragt. In einer nicht dargestellten Ausführungsform weist die Schlachtsichel 41 an ihren Außenseiten sogenannte Ausräumer auf. Die Ausräumer sind kammartig ausgebildet und gewährleisten, daß die Eingeweide 67 vollständig aus der Bauchhöhle gelöst sind, beispielsweise, wenn die Eingeweide 67 noch durch Verwachsungen mit dem Fisch verbunden sind, so daß diese nur noch durch den Darm im Bereich des Anus mit dem Fischrumpf in Verbindung sind.

Die Schlachtsichel 41 ist beweglich ausgebildet und um einen Drehpunkt 48 drehbar angeordnet. Weiterhin ist die Schlachtsichel 4 federbelastet. Der Drehpunkt 48 der Schlachtsichel 41 befindet sich im Bereich einer Schwinge 49, die ebenfalls schwenkbar um einen Drehpunkt 50 ausgebildet ist. Dadurch ist eine überlagerte Bewegung der Schlachtsichel 41 gewährleistet, nämlich eine Bewegung auf einer Kreisbahn und/oder eine lineare Bewegung, da sich die gesamte Schwinge 49 anhebt bzw. um den Drehpunkt 50 schwenkt, sobald die Schlachtsichel 41 durch einen Widerstand an der Rotationsbewegung gehindert wird. Dies führt dann zu einer linearen Bewegung der Sichelspitze 44.

In einer weiteren Ausgestaltung der Schlachtsichel 41 ist im Bereich der Sichelspitze 44, nämlich hinter der Kugel 45 ein Schneidmittel 62 vorgesehen, mit dem die Verbindung zwischen dem Darm und dem Anus unterbrochen werden kann. Hierzu ist das Schneidmittel 62 kreisförmig ausgebildet, in der Art eines Topfbohrers, eines Rundeisens oder dergleichen wobei das Schneidmittel 62 bzw. die Schneidebene im wesentlichen senkrecht zur Schlachtsichel 41 liegt.

Eine weitere Ausführungsform des Schlachtapparates 17 wird anhand der Figuren 17 bis 20 im folgenden erläutert.

Der Schlachtapparat 17 in dieser Ausführungsform besteht im wesentlichen aus einer Schlachtsichel 70 und einem Kreismesser 71.Die Schlachtsichel 70 weist an ihrer Innenseite 72 eine Schneide 73 auf, die sich nahezu bis in den Bereich der Sichelspitze 74 erstreckt. Allerdings ist der Bereich der Sichelspitze 74 selbst stumpf ausgebildet. Die Schneide 73 ist zu beiden Seiten mit einer federbelasteten Messerabdeckung 75 versehen.

Die Schlachtsichel 70 ist zweiteilig ausgebildet und weist ein erstes sogenanntes festes Hauptteil 76 und ein bewegliches Spitzenteil 77 auf. Der Spitzenteil 77 ist um einen Drehpunkt 78 schwenkbar ausgebildet, so daß sich der durch die Schneide 73 gebildete Radius unter Belastung quasi "öffnen" kann. Die Schlachtsichel 70 insgesamt ist beweglich ausgebildet und um einen Drehpunkt 79 dreh- bzw. schwenkbar angeordnet. Der Drehpunkt 79 befindet sich im Bereich einer Schwinge 80, die ebenfalls um einen Drehpunkt 81 schwenkbar ausgebildet ist. Die Schwinge 80 wird durch eine Feder 82 grundsätzlich in einer unteren Position gehalten (siehe z.B. Figur 17), wobei die Federkraft mit Bezug auf den Drehpunkt 81 im Uhrzeigersinn auf die Schwinge 80 wirkt.

Auf der Welle 83, auf der die Schlachtsichel 70 angeordnet ist, befinden sich weiterhin eine Kurvenscheibe 84 sowie eine Schwenkarm 85. Durch die Anordnung auf derselben Welle 83 laufen die Schlachtsichel 70, die Kurvenscheibe 84 und der Schwenkarm 85 synchron in einer definierten Stellung zueinander um den Drehpunkt 79. Am freien Ende des Schwenkarmes 85 ist das Kreismesser 71 angeordnet, das mittels nicht dargestellter Antriebsmittel rotierend antreibbar ist. Der Schwenkarm 85 bzw. das Kreismesser 71 sind in Bezug auf die Schlachtsichel 70 so angeordnet, daß sich das Kreismesser 71 etwa im Bereich des Hauptteils 76 der Schlachtsichel 70 befindet. Die Kurvenscheibe 84 läuft auf einer Rolle 86, die ortsfest beispielsweise am Maschinenrahmen angeordnet ist. Die Form der Kurvenscheibe ist auf den kleinsten zu verarbeitenden Fisch abgestimmt und läßt sich je nach Anforderung auswechseln. Die Kurvenscheibe 84 einerseits und die Rolle 86 andererseits haben stets Kontakt zueinander, zumindest während sich die Schlachtsichel 70 innerhalb des Fischrumpfes befindet. Dieser Kontakt, der einerseits eine genaue Führung der Schlachtsichel 70 gewährleistet und andererseits Stabilität in den gesamten Schlachtapparat 17 bringt, wird durch die Feder 82 realisiert, die mittels der Federkraft das ständige Bestreben hat, die Schwinge 80 und damit auch die Kurvenscheibe 84 nach unten auf die Rolle 86 zu ziehen. Im Falle einer Auslenkung der Schlachtsichel 70, beispielsweise wenn die Schlachtsichel auf einer Widerstand in Form der Bauchdecke stößt, wird lediglich das Spitzenteil 77 um den Drehpunkt 78 geschwenkt, während das Hauptteil 76 weiterhin entlang der Kurvenscheibe 84 geführt wird. Der zusätzliche Freiheitsgrad der Schlachtsichel 70 ist daher auf einen definierten Bereich festgelegt, so daß die frei bewegliche Masse sehr gering und somit gegenüber äußeren Störeinflüssen unempfindlich ist.

Das bewegliche Spitzenteil 77 der Schlachtsichel 70 weist eine Hebelarm 87 auf, der mittels einer Federn 89 mit dem Hauptteil 76 verbunden ist. Mittels der Feder 89 wird das Spitzenteil 77 über den Hebelarm 87 grundsätzlich in der in Figur 17 gezeigten Position gehalten. In dieser Position beschreibt die Schneide 73 etwa einen Radius. Bei Belastung der Sichelspitze 74 gegen den Uhrzeigersinn (mit Bezug auf den Drehpunkt 78) dehnt sich die Feder, während sich der Radius "öffnet". Sobald die Belastung nachläßt, ist die Feder 89 bestrebt, das Spitzenteil 77 wieder in seine Ursprungsstellung zu ziehen. Eine weitere Feder 88 ist zwischen dem Hebelarm 87 und der Messerabdeckung 75 in einem sogenannten "geschlossenen" System gespannt. Die Feder 88 bewirkt, daß die Messerabdeckung 75 bei Auslenkung des Spitzenteils 77 synchron, also parallel zu dieser verläuft bzw. sich mit bewegt. Erst wenn Belastung auf die Messerabdeckung 75 wirkt, z.B. zu Beginn des Schlachtschnittes, wird die Feder 88 gespannt. Sobald die Belastung nachläßt, zieht die Feder 88 die Messerabdeckung 75 wieder vor die Schneide 73.

Die Schlachtsichel 70 kann ebenso wie die Schlachtsichel 41 im Bereich der Sichelspitze 74 mit einem zusätzlichen Schneidmittel 90 zum Trennen der Verbindung zwischen Darm und Anus versehen sein. Auch kann die stumpfe Sichelspitze 74 mit einer Kugel 91 oder anderen stumpfen Ausbildungen ausgebildet sein.

An der untersten Position der Fischaufnahmetrommel 12 sind Mittel zum Entfernen der Eingeweide, nämlich der Darmtrennapparat 19, angeordnet. Der Darmtrennapparat 19 umfaßt drehbare Klappen, nämlich sogenannte Paddel 51. Im gezeigten Ausführungsbeispiel sind zwei Paddel 51 jeweils um 180 ° versetzt zueinander angeordnet und um eine Achse 52 drehbar. Es ist jedoch auch jede andere Anzahl von Paddeln 51 vorstellbar, die gleichmäßig um die Achse 52 verteilt sind. Zusätzlich ist eine Gegenlage 53 vorgesehen, derart, daß die Eingeweide zwischen einem der Paddel 51 und der Gegenlage 53 klemmbar sind. Die Gegenlage 53 ist magnet- und federbelastet. Über die Feder- und oder Magnetkraft ist die Klemmkraft zwischen den Paddeln 51 einerseits und der Gegenlage 53 andererseits einstellbar.

Im folgenden wird die Funktionsweise bzw. der Verfahrensablauf einer Fischschlachtung mit der beschriebenen Vorrichtung erläutert:

Die Fische werden auf einer Produktzuführung 63 in den Bereich der Vorrichtung 10 gefördert. Eine Bedienperson entnimmt die Fische einzeln von der Produktzuführung 63 und legt jeden Fisch einzeln in die dafür vorgesehene Fischaufnahme 11 der Fischaufnahmetrommel 12. Die Fischaufnahme 11 in der Einlegeposition weist mit ihrer Einlegeöffnung im wesentlichen in Richtung der Bedienperson. Der Fisch wird von der Bedienperson aus gesehen mit dem Rücken voraus, Kopf nach rechts in die still stehende und geöffnete Fischaufnahme 11 der Fischaufnahmetrommel 12 eingelegt. Beim Einlegen wird der Fisch mit den seitlich abstehenden Brustflossen 64 in Schwanzrichtung gegen Anschläge, die sogenannten Brustflossenaufnahmen 24 gedrückt, so daß der Fisch in seiner Längsrichtung positioniert ist. Während des Einlegens des Fisches ist die Rumpfklemmung 25 maximal geöffnet. Das bedeutet, daß die Seitenbacken einerseits und die Rückenauflage andererseits in ihrer jeweils weitesten Stellung sind. Somit wird der Fisch nur durch die Brustflossenaufnahmen 24 gehalten, und gleichzeitig liegt der Kopf des Fisches lose, ohne weitere Klemmung auf der Kopfauflage 22 auf.

Während des Verfahrens der Fischaufnahmetrommel 12 in die Kehlposition, in der der Fisch mit seinem Bauch nahezu senkrecht nach oben gerichtet ist, bewegen sich die Seitenbacken der Rumpfklemmung 25 aufeinander zu. Durch die Bewegung der Seitenbacken wird die Rückenauflage zwangsläufig angehoben. Durch diese synchronisierte Bewegung der Seitenbacken einerseits und der Rückenauflage andererseits befindet sich die Mittelgräte des Fisches unabhängig von der Fischgröße etwa auf derselben Höhe. Die Seitenbacken bewegen sich solange aufeinander zu, bis der Fisch fest eingespannt ist.

Sobald die Fischaufnahmetrommel 12 die Bearbeitungsposition erreicht hat, bleibt sie stehen, so daß der Kehlschnitt am ruhenden Fisch durchgeführt werden kann. Hierzu fährt der Kehlapparat 13 bzw. das Kreismesser 29 mit der Messerabdeckung 30 herunter. Dabei bewegt sich der Kehlapparat 13 auf einer experimentell ermittelten Kreisbahn 60, wobei die Kreisbahn 60 so ausgewählt ist, daß Fische unterschiedlicher Größe, vorzugsweise in einem Größenbereich von 35 bis 90 cm, ohne Maschinenverstellung bzw. Umrüstung bearbeitet werden können. Der Kreisbahn 60 folgend trifft zuerst die Messerabdeckung 30 auf den Fisch und drückt den Kopf des Fisches um die fest stehende Kante der Rückenauflage. Die federnd ausgebildete Kopfauflage 22 gibt nach und wird ebenfalls nach unten gedrückt. Die Messerabdeckung 30 greift demnach von außen an dem Fisch an, und zwar an dem Verbindungssteg 65 zwischen der Kragenknochenspitze 35 und dem Verbindungspunkt 66 der Kiemen (siehe Fig. 16). Dadurch wird die Haut vor der Kragenknochenspitze 35, also der dem Kreismesser 29 zugewandte Bereich, gespannt, so daß der Kehlschnitt erfolgen kann, ohne daß die Kragenknochenspitze 35 verletzt wird und ohne daß Kiemenreste am Kragenknochen verbleiben. Während des Kehlschnittes wird der Kiemenbogen durch die Messerabdeckung 30 abgewiesen, daß heißt, aus dem Schnitt- bzw. Wirkbereich des Kreismessers 29 heraus gehalten.

Durch das erfindungsgemäße Verfahren sucht sich der Kehlapparat 13 bzw. das Kreismesser 29 den optimalen Punkt für den Kehlschnitt, und zwar optimiert für einen Fischlängenbereich von etwa 35 bis 90 cm. Sobald das Kreismesser 29, das nahezu im rechten Winkel auf die gespannte Haut trifft, den Fisch angeschnitten hat, schlägt die Kopfklemmung 28 herunter und klemmt den Kopf zwischen Kopfauflage 22 und Kopfklemmung 28 ein. Neben der Fixierung wird, bedingt durch die Form der Kopfauflage 22 und der Kopfklemmung 28, eine Ausrichtung/Positionierung des Kopfes vorgenommen.

Der Kehlschnitt bzw. die Tiefe des Kehlschnittes ist definiert und unabhängig von der Fischgröße gleich. Die Schnittiefe wird anhand des kleinsten zu verarbeitenden Fisches festgelegt. Mit anderen Worten bedeutet dies, je größer der Fisch desto tiefer der Kehlschnitt. Die Kreisbahn 60, auf der sich der Kehlapparat 13 und damit das Kreismesser 29 bewegt, ist möglichst weit von der Kragenknochenspitze 35 entfernt. Dies hat den Vorteil, daß die Toleranzen, die die Kragenknochen in ihrer Länge -auch innerhalb eines Fischgrößenbereiches- aufweisen, unberücksichtigt bleiben können bzw. alle Toleranzen vor der Kreisbahn 60 liegen, so daß die Kragenknochenspitze 35 sicher nicht beschädigt wird.

Nach dem Kehlschnitt fährt der Kehlapparat 13 wieder in seine ursprüngliche, den Fisch freigebende Ursprungsstellung. Erst dann rotiert die Fischaufnahmetrommel 12 um etwa 45° in die nächste Bearbeitungsposition. Während der Bewegung der Fischaufnahmetrommel 12 in den Bereich des Schlundapparates 14 greift die Führung 15, und zwar zunächst das feste Element 31 und dann das bewegliche Element 32, in den Kehlschnitt ein. Dabei werden die Kragenknochenspitzen 35 quasi aufgefädelt und in Schwanzrichtung bzw. aus ihrer ursprünglichen Position gedrückt, wobei die Position des Fisches selbst aufgrund der Rumpfklemmung 25 unverändert bleibt.

Mit dem festen, starren Element 31 werden die Kragenknochen lediglich ausgerichtet bzw. vorpositioniert. Das bewegliche, drehbar gelagerte Element 32 gewährleistet, daß Fische unterschiedlicher Größe und damit unterschiedlich positionierter Kragenknochen bzw. -spitzen 35 auf eine definierte Position gebracht werden. Gleichzeitig muß aber gewährleistet sein, daß der Bereich zwischen der Kragenknochenspitze 35 und der Mittelgräte weitestgehend frei bleibt, also nicht durch die Führung 15 bzw. den Schenkel 34 des beweglichen Elementes 32 abgedeckt wird. Da der Kragenknochen bzw. die Kragenknochenspitze 35 das bewegliche Element 32 nach oben auslenkt, bleibt der Schnittbereich für den Schlundschnitt ausreichend frei. Mit anderen Worten nimmt der Kragenknochen das bewegliche Element 32 mit, so daß das Element 32 bei einem großen Fisch weiter nach oben ausgelenkt wird als bei einem kleinen Fisch. Wichtig ist jedoch, daß das Element 32 zum einen die Kragenknochenspitze 35 schützt und zum anderen den Schnittbereich freihält. Dadurch ist gewährleistet, daß das Kreismesser 37 an die Membran, die mit der Leber verwachsen ist, herankommt. Denn wenn die Membran nicht vom Fischrumpf gelöst werden kann, gestaltet sich auch das spätere Entfernen der Eingeweide schwierig.

Sobald die Fischaufnahmetrommel 12 in Ruheposition steht, verfährt der Schlundapparat 14 auf einer - ebenfalls experimentell - ermittelten Kreisbahn 61. Dabei fährt das Kreismesser 37, das durch die Messerabdeckung 38 abgedeckt ist, an den Kragenknochen, so daß die Messerabdeckung 38 hart an den Kragenknochen entlang fährt. Das Kreismesser 37 mit der Messerabdeckung 38 taucht dabei unmittelbar unterhalb des beweglichen Elementes 32 bzw. unterhalb des Schenkels 34 in den Bereich zwischen Kragenknochen und Mittelgräte. Durch diesen Schnitt wird zuerst die Membran geschnitten und dann der Schlund. Um sicherzustellen, daß der Schlund auch vollständig getrennt wird, bleibt der Schlundapparat 14 im untersten Punkt der Kreisbahn 61 stehen, wobei die Fischaufnahmetrommel 12 bereits in die nächste Bearbeitungsposition verfährt. Die Stillstandsposition des Schlundapparates 14 im tiefsten Punkt ist geringfügig seitlich versetzt zur Mittelachse des Fisches. In dieser in Transportrichtung hinter der Mittelgräte befindlichen Position steht der Schlundapparat 14 im tiefsten Punkt der Kreisbahn 61 still, allerdings mit rotierendem Kreismesser 37. Durch das Bewegen des Fisches durch das stehende aber rotierende Kreismesser 37 erfolgt eine annähernd lineare Schnittführung, so daß der Schlund auch in den Randbereichen durchtrennt wird. Bevor der nachfolgende Fisch den Schlundapparat 14 erreicht, wird dieser wieder in seine ursprüngliche Position außerhalb des Transport- bzw. Wirkbereichs der Fischaufnahmetrommel 12 bewegt.

Mit der Bewegung des Fisches in der Fischaufnahmetrommel 12 vom Schlundapparat 14 zum Köpfapparat 16 beginnt das Köpfen des Fisches. Hierzu greift eine Führung in die Ebene des Schlundschnittes ein. Diese Führung geht in die Messerabdeckung 40 des Kreismessers 39 über, die die weitere Führung übernimmt. Während der Bewegung des Fisches durch das stehende aber rotierende Kreismesser 39 wird der Kopf vollständig vom Rumpf getrennt, und zwar bevor die Fischaufnahmetrommel 12 die nächste Stillstandsposition am Schlachtapparat 17 erreicht hat. Dadurch, daß sowohl der Kopf als auch der Rumpf jeweils fixiert sind, so daß keine Verschiebung eines der Teile möglich ist, erfolgt eine definierte Schnittführung. Nach dem Trennen kann der Kopf durch Öffnen der Kopfklemmung 28 an einer beliebigen Position abgeführt werden. Während der systembedingten Stillstandsphase (intermittierende Bewegung) der Fischaufnahmetrommel 12 im Bereich des Kreismessers 39 dreht dieses im bereits ausgeführten Köpfschnitt funktionslos.

Das Verfahren der Fischaufnahmetrommel 12 vom Köpfapparat 16 zum Schlachtapparat 17 erfolgt ebenfalls funktionslos. Während des Schlachtens der Fische im Bereich des Schlachtapparates 17 steht die Fischaufnahmetrommel 12 still. Sobald die Stillstandsposition erreicht ist, wiederum etwa 45° versetzt zur Köpfposition, greift die Schlachtsichel 41 mit ihrer Sichelspitze 44 von der Kopfseite in die zwischen den Kragenknochen geöffnete Bauchhöhle ein. Sobald die Sichelspitze 44 in die Bauchhöhle eingetaucht ist, senkt sich die gesamte Schlachtsichel 41 ab, derart, daß die Sichelspitze 44 auf der Innenseite der Bauchdecke des Fisches aufliegt. Durch die bereits weiter oben beschriebene Anordnung der Schlachtsichel 41 bewegt sich diese durch Drehen zunächst in Längsrichtung, also in Schwanzrichtung des Fisches. Dabei bewegt sich die gesamte Schwinge 49 gegen den Uhrzeigersinn um den Drehpunkt 50. Die Rotationsbewegung der Schlachtsichel 41 wird also durch das Anheben derselben zumindest im Bereich der Sichelspitze 44 in eine lineare Bewegung umgewandelt. Dabei verläßt die Kurvenscheibe, mittels der die Schlachtsichel 41 grundsätzlich geführt wird, die korrespondierende Rolle, so daß die Schlachtsichel 41 bzw. der gesamte Schlachtapparat 17 einschließlich der Schwinge 49 während der linearen Bewegung der Sichelspitze 44 mindestens zeitweise frei beweglich ist. Die Auslenkung der Schlachtsichel 41 ist umso größer, je größer der zu bearbeitende Fisch ist.

Die Sichelspitze 44 gleitet/tastet sich quasi auf der Bachdecke in Richtung Anusöffnung. Sobald die Kugel 45 an der Sichelspitze 44 den Anus erreicht hat, stößt die Schlachtsichel 41 von innen nach außen durch die Bauchdecke bzw. den Anus. Durch weiteres Drehen der Schlachtsichel 41 beginnt die Schneide 43 an der Innenseite 42 der Schlachtsichel 41, die Bauchdecke vom Anus in Richtung Kopf aufzuschneiden. Für den Fall, daß zusätzliche Mittel 62 unmittelbar hinter der Kugel 45 angeordnet sind, wird vor dem eigentlichen Bauchschnitt zunächst das Verbindungselement zwischen Darm und Anus getrennt, so daß die Verbindung zwischen dem Darm und dem Fischrumpf unterbrochen ist.

Allerdings wird das sofortige Anschneiden der Bauchdecke zunächst durch die zu beiden Seiten der Schneide 43 angeordneten Messerabdeckungen 46, 47 verhindert. Die Schneide 43 wird erst freigegeben, wenn die Bauchhaut die federbelasteten und schwenkbaren Messerabdeckungen 46, 47 nach oben ausgelenkt hat. Durch den Druck der Messerabdeckungen 46, 47 auf die Bauchhaut wird diese gespannt. Des weiteren führt dieser Druck zu einer Zentrierung der Fische und insbesondere der Bauchdecke, so daß der Schlachtschnitt mittig bzw. symmetrisch erfolgt. Nunmehr fallen die Eingeweide 67 durch ihr Eigengewicht aus der geöffneten Bauchhöhle. Für den Fall, daß die Eingeweide 67 beispielsweise durch Verwachsungen in der Bauchhöhle verbleiben, sorgen Ausräumer an den Außenseiten der Schlachtsichel 41 dafür, daß die Eingeweide 67 durch die geöffnete Bauchdecke nach außen treten.

In der in den Figuren 17 bis 20 beschriebenen Ausführungsform des Schlachtapparates 17 greift die Schlachtsichel 70 mit ihrer Sichelspitze 74 von der Kopfseite in die zwischen den Kragenknochen geöffnete Bauchhöhle ein. Durch Rotation der Schlachtsichel 70 um den Drehpunkt 79 im Uhrzeigersinn senkt sich die Sichelspitze 74 ab und liegt auf der Innenseite der Bauchdecke des Fisches. Der Punkt, an dem die Sichelspitze 74 auf der Bauchdecke auftrifft, ist mittels der Kurvenform der Kurvenscheibe 84 definiert. In jedem Fall ist sichergestellt, daß die Sichelspitze 74 vor dem Anus bzw. der Anusöffnung auf der Bauchdecke aufliegt. Nach dem Aufliegen der Sichelspitze 74 bewegt sich die Schlachtsichel 70 weiter um den Drehpunkt 79, während sich die Sichelspitze 74 im wesentlichen in linearer Richtung bewegt. Der Widerstand der Bauchdecke bewirkt wieder eine Umwandlung von Rotation in lineare Bewegung. In dieser Ausführungsform schwenkt aber nicht die gesamte Schwinge 80 um den Drehpunkt 81, sondern lediglich das Spitzenteil 77 um den Drehpunkt 78. Der Freiheitsgrad der Schlachtsichel 70 beschränkt sich also lediglich auf einen definierten Bereich. Mit anderen Worten bedeutet das, daß lediglich das Spitzenteil 77 der Schlachtsichel 70 in Abhängigkeit der Fischgröße um den Drehpunkt 78 schwenkt bzw. ausgelenkt wird, während das Hauptteil 76 weiterhin eine definierte Rotationsbewegung entlang der Kurvenscheibe 84 ausführt.

Sobald die Belastung auf das Spitzenteil 77 nachläßt, entweder weil die Sichelspitze 74 durch den Anus tritt oder die Sichelspitze 74 hinter dem Anus durch die Bauchdecke stößt (und damit der durch die Bauchdecke erzeugte Gegendruck wegfällt), bewirkt die Feder 89, daß sich das Spitzenteil 77 in seine Ursprungsposition zurück bewegt. Für den Fall, daß die Schlachtsichel 70 erst hinter dem Anus aus der Bauchdecke tritt, z.B. bei Seelachs mit stabiler Bauchhaut, ist ein Anschlag 92 vorgesehen, der die Auslenkung des Spitzenteils 77, also das "Öffnen" des Radius, begrenzt, indem der Hebelarm 87 gegen den Anschlag 92 stößt. Sobald das Spitzenteil 77 gegen den Anschlag 92 schlägt, folgt die Sichelspitze 77 wieder der Rotationsbewegung des Hauptteils 76. Die Position bzw. Ausbildung des Anschlags 92 hängt von der gewünschten Austrittsposition der Schlachtsichel 70 ab und ist variabel. Der Anschlag 92 gewährleistet, daß die Schlachtsichel 70 in jedem Fall aus der Bauchdecke austritt.

Durch weiteres Drehen der Schlachtsichel 70 beginnt die Schneide 73, die Bauchdecke von hinten in Richtung Kopf von innen nach außen aufzuschneiden. Allerdings wird das sofortige Anschneiden der Bauchdecke durch die zu beiden Seiten angeordnete Messerabdeckung 75 verhindert. Die Schneide 73 wird erst freigegeben, wenn die Bauchdecke die federbalsteten und schwenkbaren Messerabdeckungen 75 nach oben ausgelenkt hat. Dabei wird die Feder 88 gespannt. Die durch die Messerabdeckung 75 verursachten Wirkungen wurden bereits zu der ersten Ausführungsform des Schlachtapparates 17 erläutert. Nach dem Bauchschitt, wenn der Druck auf die Messerabdeckung 75 nachläßt, sorgt die Feder 88 dafür, daß die Messerabdeckung 75 wieder nach unten, also vor die Schneide 73 gezogen wird.

Durch die fortlaufende Drehung der Schlachtsichel 70 um den Drehpunkt 79 kommt, in Abhängigkeit der Größe des zu bearbeitenden Fisches, letztendlich noch das Kreismesser 71 in Eingriff und öffnet die Bauchdecke vollständig. Bei kleineren Fischen wird die Bauchdecke grundsätzlich bereits durch die Schneide 73 vollständig getrennt bzw. geöffnet. Bei größeren Fischen kann ein kleiner Steg zwischen Anus und der Öffnung der Bauchhöhle stehen bleiben, der dann zuverlässig durch das Kreismesser 71 getrennt wird, so daß dann die in der Bauchhöhle verbliebenen Eingeweide nach unten aus dem Fischrumpf hängen können.

Das Verfahren der Fischaufnahmetrommel 12 vom Schlachtapparat 17 zum etwa 45° versetzten Darmtrennapparat 19 erfolgt funktionslos. Im Bereich des Därmtrennapparates 19 steht der Fisch dann horizontal, und zwar mit geöffneter Bauchhöhle nach unten gerichtet.

Unterhalb der Fischaufnahmetrommel 12 angeordnete Paddel 51 rotieren umlaufend. Die Paddel 51 erfassen die herabhängenden Eingeweide 67 und klemmen diese zwischen sich und der Gegenlage 53 ein. Hierzu ist die Gegenlage 53 magnetbelastet. Das bedeutet, daß die Klemmkraft mit zunehmendem Abstand zwischen dem Paddel 51 und der Gegenlage 53 geringer wird, bis sie ab einem definierten Abstand vollständig abreißt. Dadurch wird sichergestellt, daß Fremdkörper, die zwischen dem Paddel 51 und der Gegenlage 53 eingekelmmt werden; nicht zu einem Maschinenschaden bzw. zu einer Störung führen. Zusätzlich ist die Gegenlage 53 federbelastet, wobei die Federkraft lediglich dazu dient, die Gegenlage 53 in die eigentliche Klemmposition zurückzuziehen, falls die Magnetkraft überwunden wurde.

Durch die Drehbewegung der Paddel 51 kombiniert mit der Klemmung werden die Eingeweide 67, die lediglich noch über den Darm am Anus mit dem Rumpf verbunden sind, als Block aus der Bauchhöhle gezogen. Die mittels Zugrkraft aus der Bauchhöhle gelösten Eingeweide 67 werden in einem Behälter gesammelt und abgeführt. Beim Drehen der Fischaufnahmetrommel 12 in die nächste Position öffnet sich die Rumpfklemmung 25, so daß die Rümpfe freigegeben werden und aus der Fischaufnahme 11 fallen. Die Rümpfe werden dann gesammelt und abgeführt.

Es ist weiterhin möglich, einzelne Verfahrensschritte, insbesondere das Köpfen, auszulassen, beispielsweise durch Ausbau einzelner Apparate, wie dem Köpfapparat 16. Auch das Kehlen kann durch Ausbau des Kehlapparates 13 ausgelassen werden. Das Verfahren bzw. die einzelnen Verfahrensschritte richten sich jeweils nach den gewünschten Anforderungen. Grundsätzlich erfolgt die Bearbeitung der Fische an den einzelnen Bearbeitungsstationen parallel, so daß die Stillstandszeiten an den einzelnen Bearbeitungsstationen besonders effektiv genutzt werden.

## Patentansprüche

1. Vorrichtung zum Schlachten von Fischen, insbesondere von Weißfischen, umfassend mindestens eine Fischaufnahme (11) zum Positionieren und Aufnehmen der Fische, einen Kehlapparat (13) zum Durchtrennen der Kehle als Vorbereitung für den Schlundschnitt, einen Schlundapparat (14) zum vollständigen Durchtrennen des Schlunds, einen Schlachtapparat (17) zum Öffnen der Bauchhöhle, einen Darmtrennapparat (19) zum Lösen der Eingeweide aus der Bauchhöhle sowie eine umlaufende Fischaufinahmetrommel (12), mit der die Fische zu den einzelnen Bearbeitungsstationen bewegbar sind, wobei die Fischaufnahmetrommel (12), die intermittierend angetrieben ist, um eine horizontale Achse (20) drehbar ist, **dadurch gekennzeichnet, daß** die Fische quer zu ihrer Längsachse auf einer im wesentlichen vertikalen Kreisbahn bewegbar sind, wobei die Fischaufnahme (11) Brustflossenaufnahmen (24) zum Positionieren sowie eine Rumpfklemmung (25) zum Fixieren der Fischrümpfe umfaßt und zusätzlich zu jeder Fischaufnahme (11) eine Kopfauflage (22) mit Kopfklemmung (28) vorgesehen ist, wobei die federbelastete Kopfauflage (22) um einen Drehpunkt (27) schwenkbar ist.

2. Vorrichtung nach Anspruch 1, **dadurch gekennzeichnet, daß** zusätzlich ein Köpfapparat (16) zum Trennen des Kopfes vom Rumpf vorgesehen ist.

3. Vorrichtung nach Anspruch 1, **dadurch gekennzeichnet, daß** die Kopfauflage (22) bewegbar ausgebildet ist.

4. Vorrichtung nach Anspruch 1, **dadurch gekennzeichnet, daß** die Kopfklemmung (28) kurvengesteuert ist.

5. Vorrichtung nach Anspruch 1 oder 4, **dadurch gekennzeichnet, daß** die Kopfklemmung (28) federbelastet und um einen Drehpunkt schwenkbar ist.

6. Vorrichtung nach einem der Ansprüche 1 bis 5, **dadurch gekennzeichnet, daß** der Kehlapparat (13) ein Kreismesser (29) mit korrespondierender Messerabdeckung (30) umfaßt.

7. Vorrichtung nach einem der Ansprüche 1 bis 6, **dadurch gekennzeichnet, daß** der Kehlapparat (13) bzw. das Kreismesser (29) auf eine Kreisbahn (60) bewegbar ist.

8. Vorrichtung nach einem der Ansprüche 1 bis 7, **dadurch gekennzeichnet, daß** zwischen dem Kehlapparat (13) und dem Schlundapparat (14) Mittel zum Positionieren der Kragenknochen vorgesehen sind.

9. Vorrichtung nach einem der Ansprüche 1 bis 8, **dadurch gekennzeichnet, daß** der Schlundapparat (14) ein Kreismesser (37) mit korrespondierender Messerabdeckung (38) umfaßt.

10. Vorrichtung nach einem der Ansprüche 1 bis 9, **dadurch gekennzeichnet, daß** der Schlundapparat (14) bzw. das Kreismesser (37) auf einer Kreisbahn (61) bewegbar ist.

11. Vorrichtung nach einem der Ansprüche 1 bis 10, **dadurch gekennzeichnet, daß** mittels des Schlundapparates (14) bzw. einer Führung (15) unmittelbar vor dem Schlundapparat (14) die Kragenknochen positionierbar sind.

12. Vorrichtung nach Anspruch 2, **dadurch gekennzeichnet, daß** der Köpfapparat (16) ein ortsfestes Kreismesser (39) mit einer Messerabdeckung (40) umfaßt.

13. Vorrichtung nach Anspruch 12, **dadurch gekennzeichnet, daß** das Kreismesser (39) rotierend antreibbar ist.

14. Vorrichtung nach einem der Ansprüche 1 bis 13, **dadurch gekennzeichnet, daß** der Schlachtapparat (17) eine Schlachtsichel (41, 70) umfaßt.

15. Vorrichtung nach Anspruch 14, **dadurch gekennzeichnet, daß** die Schlachtsichel (41, 70) an ihrer Sichelspitze (44, 74) stumpf, insbesondere kugelförmig; ausgebildet ist.

16. Vorrichtung nach Anspruch 14 oder 15, **dadurch gekennzeichnet, daß** die Schlachtsichel (41, 70) an ihrer Innenseite (42, 72) scharfkantig ausgebildet ist, wobei die Schneide (43, 73) durch eine Messerabdeckung (75; 46, 47) abgedeckt ist.

17. Vorrichtung nach Anspruch 16, **dadurch gekennzeichnet, daß** die Messerabdeckung (75; 46, 47) federbelastet ist.

18. Vorrichtung nach Anspruch 16 oder 17, **dadurch gekennzeichnet, daß** die Messerabdeckung (75; 46, 47) zu beiden Seiten der Schneide (43, 73) angeordnet ist.

19. Vorrichtung nach einem der Ansprüche 14 bis 18, **dadurch gekennzeichnet, daß** die Schlachtsichel (41, 70) an ihren Außenseiten Ausräumer aufweist.

20. Vorrichtung nach Anspruch 15, **dadurch gekennzeichnet, daß** im Bereich hinter der Sichelspitze (44, 74) zusätzliche Schneidmittel (62, 90) vorgesehen sind.

21. Vorrichtung nach einem der Ansprüche 14 bis 20, **dadurch gekennzeichnet, daß** die Schlachtsichel (41, 70) beweglich ausgebildet ist, derart, daß sie absenkbar ist.

22. Vorrichtung nach einem der Ansprüche 14 bis 21, **dadurch gekennzeichnet, daß** die Schlachtsichel (41, 70) zusätzlich drehbar um den Drehpunkt (48, 79) ausgebildet ist.

23. Vorrichtung nach einem der Ansprüche 14 bis 22, **dadurch gekennzeichnet, daß** die Schlachtsichel (41, 70) an einer Schwinge (49, 80) angeordnet ist, wobei die Schwinge (49, 80) um einen Drehpunkt (50, 8 1) schwenkbar ist.

24. Vorrichtung nach einem der Ansprüche 14 bis 23, **dadurch gekennzeichnet, daß** der Schlachtapparat (17) zusätzlich zur Schlachtsichel (70) ein Kreismesser (71) umfaßt.

25. Vorrichtung nach einem der Ansprüche 14 bis 24, **dadurch gekennzeichnet, daß** die Schlachtsichel (70) zweiteilig ausgebildet ist und aus einem Hauptteil (76) und einem Spitzenteil (77) besteht.

26. Vorrichtung nach einem der Ansprüche 14 bis 25, **dadurch gekennzeichnet, daß** die Schlachtsichel (70) auf einer Welle (83) angeordnet ist.

27. Vorrichtung nach Anspruch 26, **dadurch gekennzeichnet, daß** auf der Welle (83) zusätzlich eine Kurvenscheibe (84) sowie ein Schwenkarm (85) angeordnet sind.

28. Vorrichtung nach Anspruch 27, **dadurch gekennzeichnet, daß** korrespondierend zur Kurvenscheibe (84) eine Rolle (86) vorgesehen ist, auf der die Kurvenscheibe (84) abrollen kann, wobei die Rolle (86) ortsfest angeordnet ist.

29. Vorrichtung nach Anspruch 27 oder 28, **dadurch gekennzeichnet, daß** die Schlachtsichel (70) bei der Rotationsbewegung einer festen Kurve entsprechend der Kurvenscheibe (84) folgt.

30. Vorrichtung nach einem der Ansprüche 25 bis 29, **dadurch gekennzeichnet, daß** mindestens das Spitzenteil (77) der Schlachtsichel (70) federbelastet und um einen Drehpunkt (78) schwenkbar bzw. auslenkbar ist.

31. Vorrichtung nach einem der Ansprüche 25 bis 30, **dadurch gekennzeichnet, daß** das Spitzenteil (77) über einen Anschlag (92) verfügt.

32. Vorrichtung nach Anspruch 31, **dadurch gekennzeichnet, daß** das Spitzenteil (77) über einen Hebelarm (87) verfügt, der mit dem Anschlag (92) zusammenwirkt.

33. Vorrichtung nach einem der Ansprüche 27 bis 32, **dadurch gekennzeichnet, daß** am freien Ende des Schwenkarms (85) das Kreismesser (71) angeordnet ist.

34. Vorrichtung nach einem der Ansprüche 1 bis 33, **dadurch gekennzeichnet, daß** an der untersten Position der Fischaufnahmetrommel (12), nämlich in Transportrichtung hinter dem Schlachtapparat (17) Mittel zum Entfernen der Eingeweide (67) angeordnet sind.

35. Vorrichtung nach Anspruch 34, **dadurch gekennzeichnet, daß** die Mittel bewegbare Klappen und eine Gegenlage (53) umfassen.

36. Vorrichtung nach Anspruch 35, **dadurch gekennzeichnet, daß** die Gegenlage (53) magnet- und federbelastet ist.

37. Verfahren zum Schlachten von Fischen, insbesondere von Weißfischen, umfassend die Schritte:
- Einlegen der Fische in Fischaufnahmen (11) einer Fischaufnahmetrommel (12),
- Kehlen der Fische als Vorbereitung für den Schlundschnitt mittels eines Kehlapparates (13),
- vollständiges Durchtrennen des Schlunds mit einem Schlundapparat (14),
- Öffnen der Bauchhöhle mit einem Schlachtapparat (17),
- Lösen der Eingeweide mit einem Darmtrennapparat (19), ,
- wobei die Fische mit der Fischaufnahmetrommel (12), die sich um eine horizontale Achse (20) dreht, so daß die Fische auf einer im wesentlichen vertikalen Kreisbahn bewegt werden, nacheinander und intermittierend an die einzelnen Bearbeitungsstationen bewegt werden, **dadurch gekennzeichnet, daß** die Fische
- quer zu ihrer Längsachse transportiert,
- mittels ihrer Brustflossen positioniert,
- im Bereich des Rumpfes fixiert und
- in den Fischaufnahmen (11) der Fischaufnahmetrommel (12) zusätzlich am Kopf abgestützt werden, wobei
- der Kopf auf einer Kopfauflage (22) fixiert wird.

38. Verfahren nach Anspruch 37, **dadurch gekennzeichnet, daß** der Kehlschnitt von außen ausgeführt wird, derart, daß der Kehlapparat (13) von außen am Fisch angreift.

39. Verfahren nach einem der Ansprüche 37 bis 38, **dadurch gekennzeichnet, daß** der Kopf sowie der Steg (65) zwischen der Kragenknochenspitze (35) und dem Verbindungspunkt (66) der Kiemen vor dem Kehlschnitt nach unter gedrückt werden, so daß die Haut im Bereich der Kragenknochenspitze (35) gespannt wird.

40. Verfahren nach einem der Ansprüche 37 bis 39, **dadurch gekennzeichnet, daß** der Kehlapparat (13) nach dem Kehlschnitt in seine Ursprungs-Position verfährt, so daß die Fischaufnahmetrommel (12) weiter bewegt werden kann.

41. Verfahren nach einem der Ansprüche 37 bis 40, **dadurch gekennzeichnet, daß** während der Bewegung des Fisches vom Kehlapparat (13) zum Schlundapparat (14) eine Führung (15) in den Kehlschnitt eingreift, die die Kragenknochen in eine definierte Position drückt.

42. Verfahren nach einem der Ansprüche 37 bis 41, **dadurch gekennzeichnet, daß** der Schlundapparat (14) einer Kreisbahn (61) folgend zunächst die Membran zwischen den Kragenknochen trennt und erst dann den Schlund schneidet.

43. Verfahren nach einem der Ansprüche 37 bis 42, **dadurch gekennzeichnet, daß** der Schlundapparat (14) in einer unteren Position der Kreisbahn (61) verbleibt, während sich die Fischaufnahmetrommel (12) in Richtung eines Köpfapparates (16) weiter bewegt.

44. Verfahren nach einem der Ansprüche 37 bis 43, **dadurch gekennzeichnet, daß** der Schlundapparat (14) in seine ursprüngliche Position bewegt wird, bevor der nächste Fisch zum Schlundschneiden gelangt.

45. Verfahren nach einem der Ansprüche 37 bis 44, **dadurch gekennzeichnet, daß** die Fische nach dem Durchtrennen des Schlunds mit einem Köpfapparat (16) geköpft werden.

46. Verfahren nach Anspruch 45, **dadurch gekennzeichnet, daß** während der Bewegung des Fisches vom Schlundapparat (14) zum Köpfapparat (16) eine Führung in den Schlundschnitt eingreift.

47. Verfahren nach Anspruch 45 oder 46, **dadurch gekennzeichnet, daß** der Fisch zum Köpfen durch ein ortsfest angeordnetes, rotierendes Kreismesser (39) bewegt wird.

48. Verfahren nach einem der Ansprüche 37 bis 47, **dadurch gekennzeichnet, daß** die Bauchhöhle durch eine Schlachtsichel (41, 70) geöffnet wird, wobei der Schnitt von innen nach außen erfolgt.

49. Verfahren nach einem der Ansprüche 37 bis 48, **dadurch gekennzeichnet, daß** das Öffnen der Bauchhöhle von hinten, also vom Schwanz, nach vorne, also in Richtung Kopf erfolgt.

50. Verfahren nach einem der Ansprüche 37 bis 49, **dadurch gekennzeichnet, daß** die Schlachtsichel (41, 70) von der Kopfseite in die zwischen den Kragenknochen geöffnete Bauchhöhle taucht.

51. Verfahren nach einem der Ansprüche 37 bis 50, **dadurch gekennzeichnet, daß** die Schlachtsichel (41, 70) nach dem Eintauchen in die Bauchhöhle abgesenkt wird, so daß sie auf der Innenseite der Bauchhaut aufliegt.

52. Verfahren nach Anspruch 51, **dadurch gekennzeichnet, daß** die Schlachtsichel (41, 70) bei weiterer Rotation mindestens teilweise im wesentlichen linear bewegt wird.

53. Verfahren nach Anspruch 52, **dadurch gekennzeichnet, daß** die Schlachtsichel (70) nur im Bereich der Sichelspitze (74) ausgelenkt wird.

54. Verfahren nach einem der Ansprüche 37 bis 53, **dadurch gekennzeichnet, daß** die Schlachtsichel (41, 70) mit ihrer Sichelspitze (44, 74) voraus in Richtung des Anus bzw. über diesen hinweg in Schwanzrichtung bewegt wird.

55. Verfahren nach einem der Ansprüche 37 bis 54, **dadurch gekennzeichnet, daß** die Schlachtsichel (41, 70) im Bereich des Anus bzw. hinter diesem von innen nach außen durch die Bauchhaut stößt.

56. Verfahren nach einem der Ansprüche 37 bis 55, **dadurch gekennzeichnet, daß** die Schlachtsichel (41, 70) bei weiterer Rotation die Bauchdecke aufschneidet.

57. Verfahren nach einem der Ansprüche 37 bis 56, **dadurch gekennzeichnet, daß** die Bauchhaut im Bereich der Öffnung der Bauchhöhle mittels eines Kreismessers (71) endgültig getrennt wird.

58. Verfahren nach einem der Ansprüche 37 bis 57, **dadurch gekennzeichnet, daß** nach dem Durchtrennen der Bauchhaut die Eingeweide (67) ausgeräumt werden, derart, daß diese nur noch über den Darm im Bereich des Anus mit dem Fisch verbunden sind.

59. Verfahren nach einem der Ansprüche 37 bis 58, **dadurch gekennzeichnet, daß** die Eingeweide (67) insgesamt als Block aus dem Fischkörper gelöst werden.

60. Verfahren nach einem der Ansprüche 37 bis 59, **dadurch gekennzeichnet, daß** die Eingeweide (67) geklemmt und durch eine Zugbewegung/Zugkraft abgerissen werden.

61. Verfahren nach einem der Ansprüche 37 bis 60, **dadurch gekennzeichnet, daß** der Kopf und/oder der Fischrumpf an beliebiger Position der Fischaufnahmetrommel (12) abgeführt werden können.

62. Verfahren nach einem der Ansprüche 37 bis 61, **dadurch gekennzeichnet, daß** die Fische an den jeweiligen Bearbeitungsstationen (13, 14, 16, 17, 19) parallel bearbeitet werden.

## Claims

1. Apparatus for slaughtering fish, in particular white fish, including at least one fish receptacle (11) for positioning and receiving the fish, a throat cutting apparatus (13) for cutting through the throat in preparation for the pharynx cut, a pharynx cutting apparatus (14) for completely cutting through the pharynx, a slaughtering apparatus (17) for opening the abdominal cavity, a gut severing apparatus (19) for releasing the entrails from the abdominal cavity, and a peripheral fish receiving drum (12) with which the fish can be moved to the individual processing stations, wherein the fish receiving drum (12) which is driven intermittently is rotatable about a horizontal shaft (20), **characterised in that** the fish are movable transversely to their longitudinal axis on an essentially vertical circular path, wherein the fish receptacle (11) includes pectoral fin receptacles (24) for positioning and a torso clamp (25) for fixing the fish torsos and, in addition to each fish receptacle (11), a head support (22) with head clamp (28) is provided, wherein the spring-loaded head support (22) is pivotable about a pivot point (27).

2. Device according to claim 1, **characterised in that** in addition a heading apparatus (16) is provided for severing the head from the torso.

3. Device according to claim 1, **characterised in that** the head support (22) is of movable construction.

4. Device according to claim 1, **characterised in that** the head clamp (28) is cam-controlled.

5. Device according to claim 1 or 4, **characterised in that** the head clamp (28) is spring-loaded and pivotable about a pivot point.

6. Device according to any of claims 1 to 5, **characterised in that** the throat cutting apparatus (13) includes a circular blade (29) with corresponding blade cover (30).

7. Device according to any of claims 1 to 6, **characterised in that** the throat cutting apparatus (13) or the circular blade (29) is movable on a circular path (60).

8. Device according to any of claims 1 to 7, **characterised in that** between the throat cutting apparatus (13) and the pharynx cutting apparatus (14) are provided means for positioning the collarbones.

9. Device according to any of claims 1 to 8, **characterised in that** the pharynx cutting apparatus (14) includes a circular blade (37) with corresponding blade cover (38).

10. Device according to any of claims 1 to 9, **characterised in that** the pharynx cutting apparatus (14) or the circular blade (37) is movable on a circular path (61).

11. Device according to any of claims 1 to 10, **characterised in that** by means of the pharynx cutting apparatus (14) or a guide (15) immediately in front of the pharynx cutting apparatus (14) the collarbones can be positioned.

12. Device according to claim 2, **characterised in that** the heading apparatus (16) includes a stationary circular blade (39) with a blade cover (40).

13. Device according to claim 12, **characterised in that** the circular blade (39) is rotationally drivable.

14. Device according to any of claims 1 to 13, **characterised in that** the slaughtering apparatus (17) includes a curved slaughter knife (41, 70).

15. Device according to claim 14, **characterised in that** the curved slaughter knife (41, 70) is blunt, in particular ball-shaped, at its knife tip (44, 74).

16. Device according to claim 14 or 15, **characterised in that** the curved slaughter knife (41, 70) on its inner side (42, 72) is sharp-edged, the cutting edge (43, 73) being covered by a blade cover (75; 46, 47).

17. Device according to claim 16, **characterised in that** the blade cover (75; 46, 47) is spring-loaded.

18. Device according to claim 16 or 17, **characterised in that** the blade cover (75; 46, 47) is arranged on both sides of the cutting edge (43, 73).

19. Device according to any of claims 14 to 18, **characterised in that** the curved slaughter knife (41, 70) on its outer sides comprises reamers.

20. Device according to claim 15, **characterised in that** in the region behind the knife tip (44, 74) are provided additional cutting means (62, 90).

21. Device according to any of claims 14 to 20, **characterised in that** the curved slaughter knife (41, 70) is of movable construction such that it can be lowered.

22. Device according to any of claims 14 to 21, **characterised in that** the curved slaughter knife (41, 70) is additionally constructed so as to be rotatable about the pivot point (48, 79).

23. Device according to any of claims 14 to 22, **characterised in that** the curved slaughter knife (41, 70) is arranged on a link (49, 80), the link (49, 80) being pivotable about a pivot point (50, 81).

24. Device according to any of claims 14 to 23, **characterised in that** in addition to the curved slaughter knife (70) the slaughtering apparatus (17) includes a circular blade (71).

25. Device according to any of claims 14 to 24, **characterised in that** the curved slaughter knife (70) is constructed in two portions and consists of a main portion (76) and a tip portion (77).

26. Device according to any of claims 14 to 25, **characterised in that** the curved slaughter knife (70) is arranged on a shaft (83).

27. Device according to claim 26, **characterised in that** on the shaft (83) in addition are arranged a cam plate (84) and a swivel arm (85).

28. Device according to claim 27, **characterised in that** corresponding to the cam plate (84) is provided a roller (86) over which the cam plate (84) can roll, the roller (86) being arranged stationarily.

29. Device according to claim 27 or 28, **characterised in that** during the rotational movement the curved slaughter knife (70) follows a fixed curve corresponding to the cam plate (84).

30. Device according to any of claims 25 to 29, **characterised in that** at least the tip portion (77) of the curved slaughter knife (70) is spring-loaded and pivotable or deflectable about a pivot point (78).

31. Device according to any of claims 25 to 30, **characterised in that** the tip portion (77) has a stop (92).

32. Device according to claim 31, **characterised in that** the tip portion (77) has a lever arm (87) which cooperates with the stop (92).

33. Device according to any of claims 27 to 32, **characterised in that** at the free end of the swivel arm (85) is arranged the circular blade (71).

34. Device according to any of claims 1 to 33, **characterised in that** at the lowermost position of the fish receiving drum (12), namely behind the slaughtering apparatus (17) in the direction of transport, are arranged means for removing the entrails (67).

35. Device according to claim 34, **characterised in that** the means include movable flaps and a support (53).

36. Device according to claim 35, **characterised in that** the support (53) is magnet-and spring-loaded.

37. Method for slaughtering fish, in particular white fish, including the steps of:
- laying the fish in fish receptacles (11) of a fish receiving drum (12),
- cutting open the throats of the fish in preparation for the pharynx cut by means of a throat cutting apparatus (13),
- completely cutting through the pharynx with a pharynx cutting apparatus (14),
- opening the abdominal cavity with a slaughtering apparatus (17),
- releasing the entrails with a gut severing apparatus (19),
- wherein the fish with the fish receiving drum (12) which rotates about a horizontal shaft (20) so that the fish are moved on an essentially vertical circular path, are moved successively and intermittently to the individual processing stations, **characterised in that** the fish are
- transported transversely to their longitudinal axis,
- positioned by means of their pectoral fins,
- fixed in the region of the torso and
- additionally supported at the head in the fish receptacles (11) of the fish receiving drum (12), wherein
- the head is fixed to a head support (22).

38. Method according to claim 37, **characterised in that** the throat cut is performed from the outside in such a way that the throat cutting apparatus (13) is applied to the fish from the outside.

39. Method according to any of claims 37 to 38, **characterised in that** the head and the web (65) between the collarbone tip (35) and the connecting point (66) of the gills are pushed down before the throat cut, so that the skin in the region of the collarbone tip (35) is stretched.

40. Method according to any of claims 37 to 39, **characterised in that** the throat cutting apparatus (13) after the throat cut moves into its original position, so that the fish receiving drum (12) can be moved on.

41. Method according to any of claims 37 to 40, **characterised in that** during the movement of the fish from the throat cutting apparatus (13) to the pharynx cutting apparatus (14) a guide (15) engages in the throat cut, pressing the collarbones into a precise position.

42. Method according to any of claims 37 to 41, **characterised in that** the pharynx cutting apparatus (14) following a circular path (61) first severs the membrane between the collarbones and only then cuts the pharynx.

43. Method according to any of claims 37 to 42, **characterised in that** the pharynx cutting apparatus (14) remains in a lower position of the circular path (61) while the fish receiving drum (12) moves on in the direction of a heading apparatus (16).

44. Method according to any of claims 37 to 43, **characterised in that** the pharynx cutting apparatus (14) is moved into its original position before the next fish arrives for pharynx cutting.

45. Method according to any of claims 37 to 44, **characterised in that** after severing the pharynx the fish are headed with a heading apparatus (16).

46. Method according to claim 45, **characterised in that** during the movement of the fish from the pharynx cutting apparatus (14) to the heading apparatus (16) a guide engages in the pharynx cut.

47. Method according to claim 45 or 46, **characterised in that**, for heading, the fish is moved by a stationarily mounted, rotating circular blade (39).

48. Method according to any of claims 37 to 47, **characterised in that** the abdominal cavity is opened by a curved slaughter knife (41, 70), the cut being made from the inside to the outside.

49. Method according to any of claims 37 to 48, **characterised in that** opening of the abdominal cavity is effected from the rear, that is, from the tail, to the front, that is, in the direction of the head.

50. Method according to any of claims 37 to 49, **characterised in that** the curved slaughter knife (41, 70) enters from the head side into the abdominal cavity which has been opened between the collarbones.

51. Method according to any of claims 37 to 50, **characterised in that** the curved slaughter knife (41, 70) is lowered after entering the abdominal cavity, so that it rests on the inside of the abdominal skin.

52. Method according to claim 51, **characterised in that** the curved slaughter knife (41, 70) upon further rotation is at least partially moved essentially linearly.

53. Method according to claim 52, **characterised in that** the curved slaughter knife (70) is deflected only in the region of the knife tip (74).

54. Method according to any of claims 37 to 53, **characterised in that** the curved slaughter knife (41, 70) is moved knife tip (44, 74) first in the direction of the anus or beyond it in the tail direction.

55. Method according to any of claims 37 to 54, **characterised in that** the curved slaughter knife (41, 70) penetrates through the abdominal skin from the inside to the outside in the region of the anus or behind it.

56. Method according to any of claims 37 to 55, **characterised in that** the curved slaughter knife (41, 70) cuts the abdominal cover open upon further rotation.

57. Method according to any of claims 37 to 56, **characterised in that** the abdominal skin in the region of the opening of the abdominal cavity is finally severed by means of a circular blade (71).

58. Method according to any of claims 37 to 57, **characterised in that** after severing the abdominal skin the entrails (67) are cleared out in such a way that they are joined to the fish only via the gut in the region of the anus.

59. Method according to any of claims 37 to 58, **characterised in that** the entrails (67) are detached all together en bloc from the fish body.

60. Method according to any of claims 37 to 59, **characterised in that** the entrails (67) are clamped and pulled off by a pulling movement/tensile force.

61. Method according to any of claims 37 to 60, **characterised in that** the head and/or the fish torso can be carried away at any position of the fish receiving drum (12).

62. Method according to any of claims 37 to 61, **characterised in that** the fish are processed in parallel at the respective processing stations (13, 14, 16, 17, 19).

## Revendications

1. Dispositif d'abattage de poissons, notamment de cyprinidés, le dispositif comportant au moins un réceptacle de poissons (11) destiné à positionner et recevoir les poissons, un appareil de découpage de gorge (13) destiné à entailler la gorge en préparation au découpage du pharynx, un appareil de découpage de pharynx (14) destiné à découper totalement le pharynx, un appareil d'abattage (17) destiné ouvrir l'abdomen, un appareil de séparation de boyaux (19) destiné à détacher les viscères de la cavité abdominale ainsi qu'un carrousel de réception de poissons (12), permettant de déplacer les poissons vers des stations de traitement individuelles, le carrousel de réception de poissons (12), qui est entraîné par intermittence, étant apte à tourner autour d'un axe horizontal (20), **caractérisé en ce que** les poissons sont déplaçables transversalement à leur axe longitudinal sur une trajectoire sensiblement verticale, le réceptacle de poissons (11) comportant des réceptacles de nageoires ventrales (24) pour le positionnement et un dispositif de serrage de corps (25) destiné à fixer les corps de poisson et un support de tête (22), dispositif de serrage de tête (28) étant prévu en plus de chaque réceptacle de poissons (11), le support de tête (22) contraint par ressort étant apte à pivoter autour d'un point de rotation (27).

2. Dispositif selon la revendication 1, **caractérisé en ce qu'**il comporte en plus un appareil d'étêtage (16) destiné à séparer la tête du corps.

3. Dispositif selon la revendication 1, **caractérisé en ce que** le support de tête (22) est conformé pour être mobile.

4. Dispositif selon la revendication 1, **caractérisé en ce que** le dispositif de serrage de tête (28) est commandé par cames.

5. Dispositif selon la revendication 1 ou 4, **caractérisé en ce que** le dispositif de serrage de tête (28) est contraint par ressort et est apte à pivoter autour d'un point de rotation.

6. Dispositif selon l'une des revendications 1 à 5, **caractérisé en ce que** l'appareil de découpage de gorge (13) comporte une lame circulaire (29) dotée d'un capot de lame correspondant (30).

7. Dispositif selon l'une des revendications 1 à 6, **caractérisé en ce que** l'appareil de découpage de gorge (13) respectivement la lame circulaire (29) est apte à se déplacer suivant une trajectoire circulaire (60).

8. Dispositif selon l'une des revendications 1 à 7, **caractérisé en ce qu'**il est prévu entre l'appareil de découpage de gorge (13) et l'appareil de découpage de pharynx (14) des moyens destinés à positionner les clavicules.

9. Dispositif selon une des revendications 1 à 8, **caractérisé en ce que** l'appareil de découpage de pharynx (14) comporte une lame circulaire (37) dotée d'un capot de lame correspondant (38).

10. Dispositif selon l'une des revendications 1 à 9, **caractérisé en ce que** l'appareil de découpage de pharynx (14) respectivement la lame circulaire (37) est apte à se déplacer suivant une trajectoire circulaire (61).

11. Dispositif selon l'une des revendications 1 à 10, **caractérisé en ce que** les clavicules peuvent être positionnées au moyen de l'appareil de découpage de pharynx (14) respectivement d'un guide (15) juste en avant de l'appareil de découpage de pharynx (14).

12. Dispositif selon la revendication 2, **caractérisé en ce que** l'appareil d'étêtage (16) comporte une lame circulaire fixe (39) dotée d'un capot de lame (40).

13. Dispositif selon la revendication 12, **caractérisé en ce que** la lame circulaire (39) peut être entraînée en rotation.

14. Dispositif selon l'une des revendications 1 à 13, **caractérisé en ce que** l'appareil d'abattage (17) comporte un couteau d'abattage en forme de faucille (41, 70).

15. Dispositif selon la revendication 14, **caractérisé en ce que** le couteau d'abattage en forme de faucille (41, 70) a son extrémité (44, 74) qui est émoussée, notamment sphérique.

16. Dispositif selon la revendication 14 ou 15, **caractérisé en ce que** le couteau d'abattage en forme de faucille (41, 70) a son côté intérieur (42, 72) qui est vif, et le tranchant (43, 73) est recouvert par un capot de lame (75 ; 46, 47).

17. Dispositif selon la revendication 16, **caractérisé en ce que** le capot de lame (75 ; 46, 47) est contraint par ressort.

18. Dispositif selon la revendication 16 ou 17, **caractérisé en ce que** le capot de lame (75 ; 46, 47) est placé des deux côtés du tranchant (43, 73).

19. Dispositif selon l'une des revendications 14 à 18, **caractérisé en ce que** le couteau d'abattage en forme de faucille (41,70) comporte sur ses côtés extérieurs des moyens de dégagement.

20. Dispositif selon la revendication 15, **caractérisé en ce qu'**il est prévu des moyens supplémentaires (62, 90) dans la région située en arrière de la pointe (44, 74) de la lame en forme de faucille.

21. Dispositif selon l'une des revendications 14 à 20, **caractérisé en ce que** la lame d'abattage en forme de faucille (41, 70) est conformée pour être mobile de sorte qu'elle peut être abaissée.

22. Dispositif selon l'une des revendications 14 à 21, **caractérisé en ce que** la lame d'abattage en forme de faucille (41, 70) est en plus conformée de façon à pouvoir tourner autour du point de rotation (48, 79).

23. Dispositif selon l'une des revendications 14 à 22, **caractérisé en ce que** la lame d'abattage en forme de faucille (41, 70) est placée sur une coulisse (49, 80), la coulisse (49, 80) étant apte à pivoter autour d'un point de rotation (50, 81).

24. Dispositif selon l'une des revendications 14 à 23, **caractérisé en ce que** l'appareil d'abattage (17) comporte en plus de la lame d'abattage en forme de faucille (70) une lame circulaire (71).

25. Dispositif selon l'une des revendications 14 à 24, **caractérisé en ce que** la lame d'abattage en forme de faucille (70) est conformée en deux parties et est constituée d'une partie principale (76) et d'une partie pointue (77).

26. Dispositif selon l'une des revendications 14 à 25, **caractérisé en ce que** la lame d'abattage en forme de faucille (70) est placée sur un arbre (83).

27. Dispositif selon la revendication 26, **caractérisé en ce qu'**en plus une came (84) ainsi qu'un bras pivotant (85) sont placés sur l'arbre (83).

28. Dispositif selon la revendication 27, **caractérisé en ce qu'**il est prévu, en correspondance de la came (84), un rouleau (86) sur lequel la came (84) peut rouler, le rouleau (86) étant fixe.

29. Dispositif selon la revendication 27 ou 28, **caractérisé en ce que** la lame d'abattage en forme de faucille (70) suit une courbe fixe correspondant à la came (84) pendant le mouvement de rotation.

30. Dispositif selon l'une des revendications 25 à 29, **caractérisé en ce qu'**au moins la partie pointue (77) de la lame d'abattage en forme de faucille (70) est contrainte par ressort et est apte à pivoter respectivement se déployer autour d'un point de rotation (78).

31. Dispositif selon l'une des revendications 25 à 30, **caractérisé en ce que** la partie pointue (77) dispose d'une butée (92).

32. Dispositif selon la revendication 31, **caractérisé en ce que** la partie pointue (77) dispose d'un bras de levier (87) qui coopère avec la butée (92).

33. Dispositif selon l'une des revendications 27 à 32, **caractérisé en ce que** la lame circulaire (71) est placée à l'extrémité libre du bras pivotant (85).

34. Dispositif selon l'une des revendications 1 à 33, **caractérisé en ce que** des moyens d'élimination des viscères (67) sont placés à la position la plus basse du carrousel de réception de poissons (12), c'est-à-dire en arrière de l'appareil d'abattage (17) par référence au sens de transport.

35. Dispositif selon la revendication 34, **caractérisé en ce que** les moyens comportent des volets mobiles et une butée (53).

36. Dispositif selon la revendication 35, **caractérisé en ce que** la butée (53) est contrainte par un ressort ou par un aimant.

37. Procédé d'abattage de poissons, notamment de cyprinidés, comportant les étapes consistant à :
- introduire les poissons dans des réceptacles de poissons (11) d'un carrousel de réception de poissons (12),
- découper la gorge des poissons en préparation du découpage du pharynx au moyen d'un appareil de découpage de gorge (13),
- découper totalement le pharynx au moyen d'un appareil de découpage de pharynx (14),
- ouvrir la cavité abdominale au moyen d'un appareil d'abattage (17),
- détacher les viscères au moyen d'un appareil de séparation de boyaux (19),
- les poissons étant déplacés successivement et par intermittence jusqu'à des stations de traitement individuelles au moyen du carrousel de réception de poissons (12) qui tourne autour d'un axe horizontal (20) de sorte que les poissons sont déplacés sur une trajectoire circulaire sensiblement verticale, **caractérisé en ce que** les poissons
- sont transportés transversalement à leur axe longitudinal,
- sont positionnés au moyen de leurs nageoires ventrales,
- sont fixés au niveau du corps et
- sont supportés en plus au niveau de la tête dans les réceptacles de poissons (11) du carrousel de réception de poissons (12),
- la tête étant fixée sur un support de tête (22).

38. Procédé selon la revendication 37, **caractérisé en ce que** le découpage de la gorge est réalisé depuis l'extérieur de sorte que l'appareil de découpage de gorge (13) s'engage avec le poisson depuis l'extérieur.

39. Procédé selon l'une des revendications 37 à 38, **caractérisé en ce que** la tête et l'arcade (65) entre les extrémités de clavicule (35) et le point de liaison (66) des branchies sont pressés vers le bas avant de découper la gorge de façon à tendre la peau dans la région de l'extrémité de clavicule (35).

40. Procédé selon l'une des revendications 37 à 39, **caractérisé en ce que** l'appareil de découpage de gorge (13) est ramené dans sa position d'origine après le découpage de la gorge de sorte que le déplacement du carrousel de réception de poissons (12) peut se poursuivre.

41. Procédé selon l'une des revendications 37 à 40, **caractérisé en ce qu'**un guide (15), qui presse les clavicules dans une position définie, s'engage dans la découpe de gorge, pendant le déplacement du poisson de l'appareil de découpage de gorge (13) vers l'appareil de découpage de pharynx (14).

42. Procédé selon l'une des revendications 37 à 41, **caractérisé en ce que** l'appareil de découpage de pharynx (14) sépare tout d'abord la membrane située entre les clavicules puis découpe la pharynx en suivant une trajectoire circulaire (61).

43. Procédé selon l'une des revendications 37 à 42, **caractérisé en ce que** l'appareil de découpage de gorge (14) reste dans une position basse de la trajectoire circulaire (61) tandis que le carrousel de réception de poissons (12) continue à se déplacer en direction d'un appareil d'étêtage (16).

44. Procédé selon l'une des revendications 32 à 43, **caractérisé en ce que** l'appareil de découpage de pharynx (14) est déplacé dans sa position d'origine avant que le poisson suivant ne parvienne au découpage de pharynx.

45. Procédé selon l'une des revendications 37 à 44, **caractérisé en ce que** les poissons sont étêtés avec un appareil d'étêtage (16) après découpe du pharynx.

46. Procédé selon la revendication 45, **caractérisé en ce qu'**un guide s'engage dans la découpe de gorge pendant que le poisson se déplace de l'appareil de découpage de pharynx (14) vers l'appareil d'étêtage (16).

47. Procédé selon la revendication 45 ou 46, **caractérisé en ce que** le poisson est déplacé afin d'être étêté par une lame circulaire (39) en rotation et placée fixe.

48. Procédé selon l'une des revendications 37 à 47, **caractérisé en ce que** la cavité abdominale est ouverte par une lame d'abattage en forme de faucille (41, 70), la découpe étant effectuée de l'intérieur vers l'extérieur.

49. Procédé selon l'une des revendications 37 à 48, **caractérisé en ce que** l'ouverture de la cavité abdominale est effectuée depuis l'arrière, depuis la queue, vers l'avant, en direction de la tête.

50. Procédé selon l'une des revendications 37 à 49, **caractérisé en ce que** la lame d'abattage en forme de faucille (41, 70) pénètre du côté de la tête dans la cavité abdominale ouverte entre les clavicules.

51. Procédé selon l'une des revendications 37 à 50, **caractérisé en ce que** la lame d'abattage en forme de faucille (41,70) est abaissée après avoir pénétré dans la cavité abdominale de façon à porter sur le côté intérieur de la peau ventrale.

52. Procédé selon la revendication 51, **caractérisé en ce que** la lame d'abattage en forme de faucille (41, 70) est déplacée au moins partiellement suivant une trajectoire sensiblement linéaire lorsqu'elle continue de tourner.

53. Procédé selon la revendication 52, **caractérisé en ce que** la lame d'abattage en forme de faucille (70) n'est déployée que dans la région de la pointe (74) de la lame en forme de faucille.

54. Procédé selon l'une des revendications 37 à 53, **caractérisé en ce que** la lame d'abattage en forme de faucille (41, 70) avec sa pointe (44, 74) est déplacée tout d'abord vers la queue en direction de l'anus respectivement au-delà de celui-ci.

55. Procédé selon l'une des revendications 37 à 54, **caractérisé en ce que** la peau du ventre oppose une résistance, de l'intérieur vers l'extérieur, à la lame d'abattage en forme de faucille (41, 70) dans la région de l'anus respectivement en arrière de celui-ci.

56. Procédé selon l'une des revendications 37 à 55, **caractérisé en ce que** la lame d'abattage en forme de faucille (41, 70) découpe la paroi abdominale lorsqu'elle continue de tourner.

57. Procédé selon l'une des revendications 37 à 56, **caractérisé en ce que** la peau du ventre est découpée définitivement au moyen d'une lame circulaire (71) au niveau de l'ouverture de la cavité abdominale.

58. Procédé selon l'une des revendications 37 à 57, **caractérisé en ce que** les viscères (67) sont dégagées après avoir découpé la peau du ventre de telle sorte qu'ils sont encore reliés au poisson par le boyau au niveau de l'anus.

59. Procédé selon l'une des revendications 37 à 58, **caractérisé en ce que** les viscères (67) sont détachés d'un seul bloc du corps du poisson.

60. Procédé selon l'une des revendications 37 à 59, **caractérisé en ce que** les viscères (67) sont serrés et déchirés par un mouvement de traction ou une force de traction.

61. Procédé selon l'une des revendications 37 à 60, **caractérisé en ce que** la tête et/ou le corps du poisson peut être emporté à une position quelconque du carrousel de réception de poissons (12).

62. Procédé selon l'une des revendications 37 à 61, **caractérisé en ce que** les poissons sont traités simultanément dans des stations de traitement respectives (13, 14, 16, 17, 19).
